# FASCICULE DE BREVET EUROPEEN

(11) **EP 2 927 907 B1**
(45) Date de publication et mention de la délivrance du brevet: **08.02.2017**
(21) Numéro de dépôt: 15159837.2
(22) Date de dépôt: 19.03.2015
(51) Int. Cl.: G21C 19/46, G21F 9/04, G21F 9/06, G21F 9/16

(54) **PROCÉDÉ DE DÉCONTAMINATION DE DÉCHETS RADIOACTIFS ALCALINS BORATÉS**
VERFAHREN ZUR DEKONTAMINIERUNG VON RADIOAKTIVEN ALKALIBORAT-ABFÄLLEN
METHOD FOR DECONTAMINATING BORATED ALKALINE RADIOACTIVE WASTE

(30) Priorité: 19.03.2014 FR 1452267
(43) Date de publication de la demande: 07.10.2015
(73) Titulaire: O.T.N.D. - ONET TECHNOLOGIES NUCLEAR DECOMMISSIONING, 13009 Marseille (FR)
(72) Inventeur: Rottner, Bernard, 13009 MARSEILLE (FR)
(74) Mandataire: Debay, Yves

(56) Documents cités:
- EP-A1- 0 315 584
- WO-A1-2004/049352
- DE-A1-102004 045 524
- GB-A- 2 005 655
- GB-A- 2 080 605

## Description

### DOMAINE TECHNIQUE DE L'INVENTION

La présente invention se rapporte au domaine des déchets radioactifs, et plus particulièrement à un procédé de décontamination de déchets radioactifs alcalins et boratés, notamment de concentrat d'évaporateur de réacteur nucléaire de type réacteur à eau sous pression (REP) ou *pressurized water reactor* (PWR) en anglais.

### ARRIÈRE-PLAN TECHNOLOGIQUE DE L'INVENTION

Ce type de déchets se présente sous forme solide comme des cristaux de sels ou liquide comme une solution aqueuse desdits sels. Les dits sels sont essentiellement des borates, carbonates et nitrates de Li, Na et K. Ils comportent des impuretés telles que des chlorures, sulfates, phosphates, nitrites et divers sels et composés de métaux multivalents. Ces déchets comportent aussi une part importante de composés organiques. Cette part peut être par exemple de 10%, voire plus.

D'une manière générale, une décontamination s'adressant à un flux de déchets radioactifs a pour but de séparer ce flux en deux :
- un flux de déchets décontaminés, dans lequel la radioactivité résiduelle subsistant après décontamination doit répondre aux critères locaux de déclassement pour lequel les déchets ne sont plus considérés comme radioactifs ou de décatégorisation pour laquelle les déchets entrent alors dans une catégorie inférieure de déchets radioactifs de moindre activité,
- un flux de déchets secondaires concentrant la radioactivité. Les volumes associés à ce flux doivent être aussi faibles que possible avec toutefois une limite de concentration d'activité au-delà de laquelle les déchets secondaires deviennent trop difficiles à mettre en stockage définitif. Ces déchets secondaires doivent être conditionnés selon des critères contraignants en vue de son stockage définitif.

Pour ce qui concerne les radioéléments que l'on trouve dans un concentrat d'évaporateur, les catégories de déchets en France sont les suivants :
- TFA (très faiblement actif) : le flux de déchets décontaminés doit entrer dans cette catégorie. En France, l'objectif d'une décontamination est la décatégorisation,
- FMA VC (faiblement ou moyennement actif, vie courte), à destination d'un stockage de surface : le flux de concentrat initial entre dans cette catégorie. Il est préférable que les déchets secondaires restent dans cette catégorie,
- MA VL (moyennent actif, vie longue), à destination d'un stockage géologique : il faudra éviter de trop concentrer la radioactivité afin que les déchets secondaires n'entrent pas dans cette catégorie. En effet, non seulement les coûts de stockage sont très élevés, mais de plus il faudrait prévoir l'entreposage des déchets dans l'attente de l'ouverture du centre de stockage géologique.

Hors France, l'objectif d'une décontamination est en général un déclassement, c'est-à-dire que l'on vise à faire perdre son caractère radioactif aux déchets décontaminés. Le facteur de décontamination correspondant au rapport de l'activité des déchets initiaux et de l'activité résiduelle dans les déchets décontaminés devra alors être plus élevé.

Le document DE 10 2004 045 524 enseigne un procédé de décontamination de déchets radioactifs par minéralisation par l'ozone des composés organiques contenus dans les déchets et par la séparation des nucléotides par précipitation. Le procédé de ce document ne donne pas de solution dans la cas où il existe encore des composés organiques après la minéralisation. En outre, il ne donne pas de solution quant aux rejets de carbone 14 et de radioéléments tels que le strontium 90 et l'iode 129.

### DESCRIPTION GÉNÉRALE DE L'INVENTION

La présente invention a pour objet non seulement d'atteindre les critères TFA en France ou de déclassement partout ailleurs, mais il permet aussi d'obtenir des déchets secondaires de faibles volumes et facilement conditionnables selon les spécifications d'acceptation des centres de stockage de surface, par exemple des déchets conditionnés sous forme d'un bloc solide résistant à la compression et à la lixiviation.

À cet effet, l'invention concerne un procédé de décontamination de déchets radioactifs alcalins boratés selon la revendication 1 comprenant au moins un composé organique et un radioélément pour obtenir un concentrat de déchets décontaminés et des déchets secondaires, le procédé comprenant au moins les étapes suivantes :
- une étape de préparation des déchets ;
- une étape de minéralisation des composés organiques contenus dans les déchets ;
- une étape d'extraction des radioéléments contenus dans les déchets pour obtenir le concentrat de déchets décontaminés ;
caractérisé en ce que l'étape d'extraction comprend au moins une étape de contact des déchets avec du charbon actif.

Selon une autre particularité, l'étape de minéralisation comprend au moins une étape de traitement par bullage par de l'ozone des déchets radioactifs pour des valeurs de pH comprises entre 8 et 10 dans une cuve de préparation.

Selon une autre particularité, l'étape de minéralisation comprend en outre une étape de stripage de CO₂ créé à partir du bullage de l'ozone dans les déchets.

Selon une autre particularité, l'étape d'extraction comprend au moins une étape de précipitation comprenant au moins un cycle d'extraction du césium et de composants organiques résiduels qui n'ont pas été minéralisés lors de l'étape de minéralisation, le cycle d'extraction comprenant :
- l'étape de contact qui est une étape d'ajout du charbon actif et de zéolithe dans les déchets contenus dans une cuve amont,
- une étape de mélange ou d'agitation dans la cuve amont du charbon actif, de la zéolithe et des déchets pour obtenir une première partie solide précipitée et une partie liquide,
- une étape de séparation de la première partie solide et de la partie liquide,
la première partie solide étant ajoutée aux déchets secondaires et la partie liquide étant transférée dans une cuve aval,
la partie liquide étant éventuellement réintroduite dans la cuve amont pour un autre cycle d'extraction en tant que déchets.

Selon une autre particularité, l'étape d'extraction comprend au moins une étape de précipitation comprenant au moins un cycle d'extraction du césium et de composants organiques résiduels qui n'ont pas été minéralisés par l'étape de minéralisation, le cycle d'extraction comprenant :
- l'étape de contact qui est une étape d'ajout du charbon actif et une étape d'ajout ou de synthèse de sel de ferricyanure dans les déchets contenus dans la cuve amont,
- une étape de mélange ou d'agitation dans la cuve amont du charbon actif, du sel de ferricyanure et des déchets pour obtenir une première partie solide précipitée et une partie liquide,
- une étape de séparation de la première partie solide et de la partie liquide,
la première partie solide étant ajoutée aux déchets secondaires et la partie liquide étant transférée dans une cuve aval,
la partie liquide étant éventuellement réintroduite dans la cuve amont pour un autre cycle d'extraction en tant que déchets.

Selon une autre particularité, l'étape de synthèse de sel de ferricyanure est une synthèse de bleu de Prusse comprenant :
- une étape d'ajout de 0,05 g à 10 g de K₃Fe(CN)₆ par litre de déchet,
- une étape d'ajout de sel de cobalt à la stoechiométrie pour former du KCoFe(CN)₆,
la première partie solide étant le KCoFe(CN)₆ entrainant le césium.

Selon une autre particularité, l'étape d'extraction comprend au moins une étape d'absorption en colonnes, l'étape d'absorption en colonnes comprenant :
- l'étape de contact qui est une étape de passage des déchets par au moins une première colonne et une deuxième colonne successives contenant du charbon actif pour absorber les composés organiques résiduels qui n'ont pas été minéralisés lors de l'étape de minéralisation, puis de passage des déchets par au moins une troisième colonne et une quatrième colonne successives contenant de la zéolithe pour absorber le césium,
- une étape de détection de la saturation du charbon actif de la première colonne par un premier système de détection qui détecte la présence de déchets organiques lors du passage des déchets de la première colonne à la deuxième colonne,
   le charbon actif de la première colonne étant ajouté aux déchets secondaires lorsque des composés organiques sont détectés par le premier système de détection, la deuxième colonne prenant la place de la première colonne, la première colonne prenant la place de la deuxième colonne et étant remplie de charbon actif non saturé,
- une étape de détection de la saturation de la zéolithe de la troisième colonne par un deuxième système de détection qui détecte la présence de césium lors du passage des déchets de la troisième colonne à la quatrième colonne,
la zéolithe de la troisième colonne étant ajoutée aux déchets secondaires lorsque du césium est détecté par le deuxième système de détection, la quatrième colonne prenant la place de la troisième colonne, la troisième colonne prenant la place de la quatrième colonne et étant remplie de zéolithe non saturée.

Selon l'invention, l'étape d'extraction comprend en outre un cycle d'extraction du strontium 90 et d'autres radioéléments contenu dans les déchets suivant le cycle d'extraction du césium et des composés organiques résiduels, le cycle d'extraction du strontium 90 et d'autres radioéléments comprenant :
- une étape d'ajout d'oxyde ou d'hydroxyde de baryum et/ou de calcium et, éventuellement, d'un sel de sulfate dans les déchets contenus dans la cuve amont pour obtenir une deuxième partie solide précipitée de sulfate et de carbonate de baryum et/ou de calcium entraînant un co-précipité du strontium 90,
- une étape d'ajustement du pH à 10 par ajout de base,
- une étape de séparation de la deuxième partie solide et d'une partie liquide,
la deuxième partie solide étant ajoutée aux déchets secondaires et la partie liquide étant transférée dans la cuve aval.

Selon une autre particularité, l'étape d'extraction comprend en outre au moins un cycle d'extraction de l'iode 129 contenu dans les déchets, le cycle d'extraction de l'iode 129 comprenant :
- une étape d'ajout d'iode non radioactif sous forme soluble en mélange d'iodure et d'iodate dans les déchets contenus dans la cuve amont,
- une étape d'ajout de plomb ou d'argent non radioactif sous forme soluble en quantité stoechiométrique dans les déchets pour obtenir une troisième partie solide comprenant de l'iodure de plomb ou d'argent et de l'iodate d'argent et une partie liquide,
- une étape de séparation de la troisième partie solide et de la partie liquide,
la troisième partie solide étant ajoutée aux déchets secondaires et la partie liquide étant transférée dans la cuve aval,
la partie liquide étant éventuellement réintroduite dans la cuve amont pour un autre cycle d'extraction de l'iode 129 en tant que déchets.

Selon une autre particularité, l'étape d'extraction comprend en outre un cycle d'extraction des métaux de transition résiduels contenus dans les déchets après le cycle d'extraction du strontium 90 et d'autres radioéléments, le cycle d'extraction des métaux de transition comprenant :
- une étape d'ajout d'un composé de soufre, par exemple du TMT15® dans les déchets pour obtenir une quatrième partie solide précipitée des métaux de transition résiduels,
- une étape de filtration de la quatrième partie solide et d'une partie liquide,
la quatrième partie solide étant ajoutée aux déchets secondaires, la partie liquide étant le concentrat de déchets décontaminés.

Selon une autre particularité, l'étape d'extraction de métaux de transition est précédée d'un cycle d'extraction du césium comprenant les étapes suivantes :
- une étape d'ajout de tétraphénylborate de sodium dans les déchets pour obtenir une partie solide comprenant du césium et une partie liquide,
- une étape de séparation de la partie solide et d'une partie liquide,
la partie solide étant ajoutée aux déchets secondaires, la partie liquide étant réintroduite dans le cycle d'extraction du césium en tant que déchet ou étant introduit dans le cycle d'extraction de métaux de transition.

Selon une autre particularité, l'étape de minéralisation comprend une étape de maintien de la valeur de pH dans une plage de 9 à 10 par ajout de base.

Selon une autre particularité, l'étape de préparation comprend au moins les étapes suivantes :
- une étape d'ajustement du pH des déchets à une valeur de 4 par ajout d'acide dans la cuve de préparation,
- une étape de stripage du CO₂ à l'air ou à l'azote afin de dégazer le carbone minéral contenu dans les déchets,
- une étape pour remonter la valeur de pH des déchets dans une plage allant de 8 à 9.

Selon une autre particularité, l'étape de préparation comprend au moins une étape d'ajustement de la concentration des déchets.

Selon une autre particularité, l'étape de préparation comprend en outre les étapes suivantes :
- une étape d'ajustement du pH des déchets à une valeur de 4 par ajout d'acide dans la cuve de préparation,
- une étape de stripage du CO₂ à l'air ou à l'azote afin de dégazer et rejeter dans l'atmosphère le carbone minéral contenu dans les déchets, le carbone 14 contenu dans les déchets étant capturé sous forme de carbonate de calcium ou de baryum par un dispositif de lavage à la soude ou un filtre à chaux vive connecté à un ou des évents de la cuve de préparation, le carbonate de calcium ou de baryum étant ajouté aux déchets secondaires,
- une étape pour remonter la valeur de pH des déchets dans une plage allant de 8 à 9.

Selon une autre particularité, l'étape de préparation comprend en outre les étapes suivantes :
- une étape d'ajout de chlorure de baryum pour obtenir un précipité de carbonate de baryum,
- une étape d'ajout du carbonate de baryum aux déchets secondaires.

Selon une autre particularité, le procédé comprend une étape d'évaporation dans laquelle la partie liquide obtenue suite à l'étape d'extraction est évaporée pour obtenir un solide composé de sels et de boue séchée.

Selon une autre particularité, le procédé comprend une étape de cimentation des déchets secondaires comprenant une étape de concentration des déchets secondaires par évaporation et/ou mécaniquement jusqu'à ce que la teneur en eau contenue dans les déchets secondaires atteigne une valeur correspondant à la formulation d'un ciment.

Selon une autre particularité, le procédé comprend une étape de traitement thermique des déchets secondaires.

L'invention, avec ses caractéristiques et avantages, ressortira plus clairement à la lecture de la description faite en référence aux dessins annexés dans lesquels :

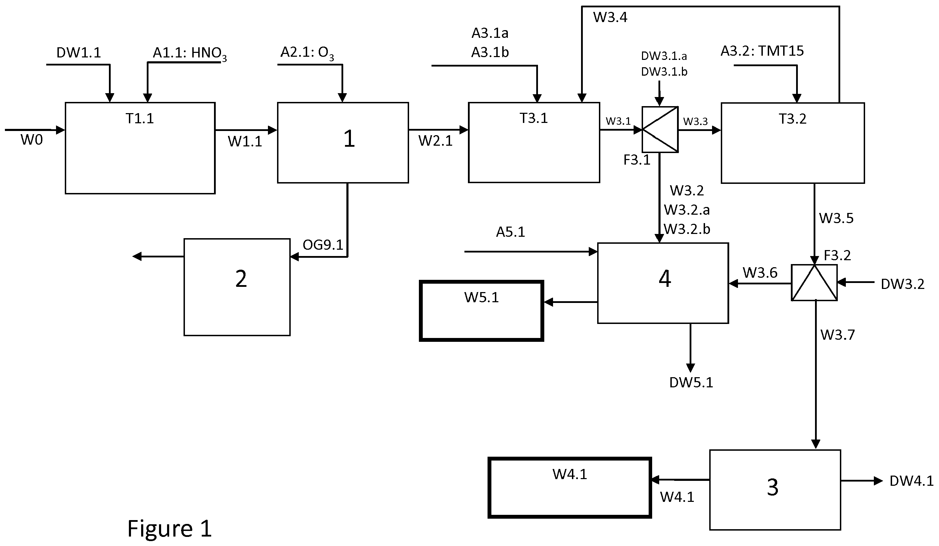

La figure 1 est un diagramme illustrant les étapes du procédé.

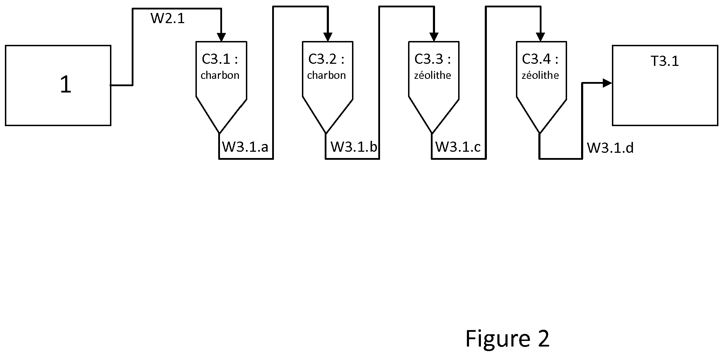

La figure 2 est un diagramme représentant un cycle d'extraction du césium et des composants organiques résiduels selon une configuration.

### DESCRIPTION DES MODES DE RÉALISATION PRÉFÉRÉS DE L'INVENTION

La suite de la description fera référence aux figures citées ci-dessus.

Le but de l'invention est la décontamination de déchets radioactifs, notamment de concentrat d'évaporateur liquide ou solide.

Un concentrat d'évaporateur comporte au moins :
- des borates, des carbonates et des nitrates de lithium, de sodium, et de potassium qui sont les composants majoritaires entre 50% et 99% de l'extrait sec en masse,
- des composés organiques non volatiles entre 1% et 50% de l'extrait sec en masse,
- des chlorures, des sulfates, des nitrites et des phosphates de lithium, de sodium et de potassium qui sont des composants secondaires entre 0% et 20% de l'extrait sec en masse,
- des impuretés entre 0% et 10% de l'extrait sec en masse.

Les impuretés dépendent de la centrale nucléaire et de son historique, mais aussi de la limite de détection des analyses. Plus cette limite est basse, plus on trouve d'impuretés jusqu'à presque obtenir la totalité de la table de Mendeleïev. Parmi les plus significatives, on trouve des composés des constituants des différents alliages métalliques utilisés en centrale nucléaire tels que le cobalt, le chrome, le cuivre, le fer, le magnésium, le manganèse, le molybdène, le nickel, l'étain, le zinc, et aussi des composés du baryum, du calcium, du silicium, du strontium.

Le pH du concentrat est généralement compris entre 9 et 10.

Le niveau d'activité correspond aux niveaux FMA VC dans le cadre français et plus généralement à un stockage de surface. Les radioéléments potentiellement présents sont tous ceux que l'on peut trouver dans une centrale nucléaire : des produits d'activation dont les plus importants sont ⁶⁰Co, ⁶³Ni, ⁵⁵Fe, des produits de fission dont les plus importants sont ¹³⁷Cs, ¹³⁴Cs, ⁹⁰Sr et des actinides qui sont essentiellement des isotope de l'uranium et du plutonium.

Habituellement, les produits d'activation sont prépondérants mais si la tranche nucléaire a connu des ruptures de gaine, les produits de fission peuvent devenir prépondérants. Ils sont alors accompagnés d'actinides en quantités significatives.

Dont le but est d'obtenir à partir du concentrat :
- d'une part un concentrat décontaminé (W4.1), classé en TFA dans le contexte français ou comme déchet non radioactif ailleurs,
- d'autre part, un résidu radioactif ou déchet secondaire(W5.1) de volume aussi faible que possible tout en conservant un niveau d'activité compatible avec un classement FMA VC conditionné de manière conforme aux spécifications d'acceptation en stockage de surface.

Le procédé décrit prend en compte un concentrat contenant des borates, des nitrates, des nitrites, des sulfates et des carbonates. Les composés organiques sont modélisés par de la fluorescéine (C₂₀H₁₀O₅Na₂). Le pH du concentrat a une valeur de 10.

L'ensemble du procédé sauf pour l'étape d'évaporation fonctionne à température ambiante. Il se peut toutefois que certaines réactions chimiques, notamment les réactions acido-basique, dégagent de la chaleur. Dans ce cas, il faut veiller à conserver une température inférieure à 30°C, par échange thermique adéquat, ou refroidissement actif.

Le procédé est réalisé avec un ensemble de cuves comprenant des évents connectés à une bouche d'extraction de ventilation.

Le pH du concentrat varie au long du procédé ; il dépend des choix technologiques aux différentes étapes, et de l'autorisation ou non de rejeter du ¹⁴C à l'atmosphère.

Le procédé de base décrit ci-après est optimisé pour :
- un rejet du ¹⁴C à l'atmosphère : le concentrat pour lequel cette version du procédé est définie contient beaucoup de carbonates et de composés organiques. Le rejet du CO₂ chargé en ¹⁴C permet dans ce cas d'éviter la génération de volumes importants de déchet secondaire (W5.1),
- un procédé de minéralisation, telle que l'ozonation, fonctionnant à pH faible. Ce type de procédé est mieux adapté aux cas de rejet de ¹⁴C à l'atmosphère,
- un procédé d'extraction du Cs fonctionnant à pH faible. Ce type de procédé est mieux adapté aux cas de rejet de ¹⁴C à l'atmosphère.

Nous décrirons plus loin d'autres versions du procédé, adaptées à l'interdiction ou plus précisément la limitation de rejet de ¹⁴C.

Dans la suite de la description, nous utiliserons indifféremment le terme « concentrat » et « déchets » pour désigner les déchets à décontaminer.

### 1. Préparation

Selon une configuration, le procédé comprend une étape de préparation.

Dans le cas où le concentrat (WO) est sous forme solide, il est dissout dans de l'eau distillée (DW1.1) en ajustant sa concentration dans une cuve de préparation (T1.1).

Dans le cas où le concentrat (WO) est liquide, sa concentration est éventuellement ajustée pour éviter de dépasser une valeur maximale comprise dans une plage allant de 100 g à 300 g d'extrait sec par kilogramme de concentrat selon les valeurs de pH qui sont utilisées dans le procédé. De préférence, la valeur maximale est de 150 g d'extrait sec par kilogramme de concentrat. Le procédé ne requiert pas de valeur minimale de concentration initiale. Si le déchet est fourni sous forme concentrée, il faut éventuellement le diluer. Sinon, s'il est fourni sous forme diluée, il est plus avantageux de le traiter en l'état.

Selon un mode de réalisation où la teneur en carbone totale est élevée, le pH de la solution de concentrat est ajusté à 4 par ajout (A1.1) d'acide nitrique ou d'acide chlorhydrique dans la cuve de préparation (T1.1).

À un pH égal à 10, les borates contenus dans les déchets sont initialement sous forme de métaborates (BO₂⁻) et de tétraborates (B₄O₇²⁻) . Lors du passage à un pH de 4, ils sont transformés en acide borique (H₃BO₃) d'après les équations suivantes :

HNO₃ + BO₂⁻ + H₂O → H₃BO₃ + NO₃⁻

2HNO₃ + B₄O₇²⁻ + 5H₂O → 4H₃BO₃ + 2NO₃⁻

À un pH égal à 10, les carbonates sont majoritairement sous forme de bicarbonates (HCO₃⁻). Lors du passage à un pH de 4, ils sont transformés en acide : HCO₃⁻ + HNO₃ → CO₂ + NO₃⁻ + H₂O.

La fluorescéine passe également sous forme acide : C₂₀H₁₀O₅²⁻ + 2HNO₃ → C₂₀H₁₂O₅ + 2NO₃⁻.

Le CO₂ a tendance à dégazer spontanément de la solution. Une partie s'échappe dans la ventilation à travers l'évent de la cuve de préparation (T1.1).

Les déchets (W1.1) ainsi préparés sont prêts pour l'étape (1) de minéralisation.

### 2. Minéralisation

Le procédé comprend une étape (1) de minéralisation.

L'étape (1) de minéralisation présentée dans la description est une ozonation mais d'autres procédés de minéralisation peuvent être utilisés.

L'ozone (A2.1) utilisé pour l'ozonation est préférentiellement produit par un générateur d'ozone ou ozoneur alimenté avec de l'oxygène plutôt qu'avec de l'air. Cela évite la production d'oxydes d'azote qui s'ajouteront aux nitrates déjà existant dans la solution de déchets. De plus, le même ozoneur produit plus d'ozone lorsqu'il est alimenté par de l'oxygène que par de l'air, ce qui permet de détruire plus de composés organiques.

L'oxygène est par exemple produit en ligne et sur place à partir d'air par un système d'adsorption modulée en pression ou autrement appelé PSA, en anglais *Pressure swing adsorption.* Ce type de système génère un gaz contenant typiquement 95% d'oxygène et 5% d'argon.

L'ozoneur produit l'ozone (A2.1) à partir de l'oxygène contenu dans le gaz d'alimentation : 3O₂ → 2O₃.

Le gaz issu de l'ozoneur contient environ 10% en masse d'ozone. Les 90% restant sont de l'oxygène et de l'argon.

L'ozone est dissout dans la solution de déchet par bullage du gaz (A2.1) issu de l'ozoneur.

Il faut typiquement 1,3 g d'ozone pour détruire 1 g de DCO (demande chimique en oxygène). 1 g de fluorescéine (C₂₀H₁₂O₅) représente 2 g de DCO.

Les matières organiques sont transformées en CO₂ et en eau et d'autres composés tels que les nitrates si les composés organiques contenaient d'autres atomes que C, H et O. Les autres réducteurs sont oxydés.

3NO₂⁻ + O₃ → 3NO₃⁻

C₂₀H₁₂O₅ + (41/3)·O₃ → 20CO₂ + 6H₂O

La minéralisation permet d'atteindre une DCO de l'ordre de 100 ppm environ pour une DCO initiale allant jusqu'à 5% à 10 %.

Le gaz issu de l'ozoneur traverse la solution, ce qui permet un stripage ou stripping du CO₂. Un stripping est un entraînement d'une espèce en solution par bullage d'un gaz dans cette solution. Ce stripping sera, si nécessaire, complété par un stripping à l'air ou à l'azote, afin d'atteindre un taux de rejet de carbone souhaité. Typiquement, on pourra éliminer de la solution de concentrat jusqu'à 99% du carbone initial, qu'il soit organique ou minéral. Ce carbone éliminé sera rejeté à l'atmosphère sous forme de CO₂.

L'ozone (OG9.1) qui ressort du bullage est détruit thermiquement (2) avant de sortir par les évents de la cuve de préparation (T1.1).

Les déchets (W2.1) ainsi traités sont prêts pour la ou les étapes d'extraction.

### 3. Extraction

Le procédé comprend une étape de d'extraction des radioéléments contenus dans les déchets.

Dans cette étape, les déchets sont mis en contact avec du charbon actif par mélange avec le charbon actif ou par passage des déchets dans des colonnes contenant du charbon actif.

Cette étape comprend aussi l'extraction des composés organiques résiduels qui n'ont pas été minéralisés dans l'étape (1) de minéralisation.

Il est important d'éliminer tous les composés organiques car le cobalt, dont l'isotope 60 est un des principaux éléments, est complexé par les composés organiques et échappe alors aux précipitations réalisées pendant le procédé.

Dans une première configuration, l'étape d'extraction des radioéléments est une étape de précipitation comprenant au moins un cycle d'extraction du césium et des composés organiques résiduels. Le nombre de cycles est principalement défini par l'objectif de facteur de décontamination pour le césium. Chaque cycle permet d'obtenir un facteur 100. Ainsi, si, par exemple, on vise en facteur de décontamination de 1 000 000 pour le césium, on fera 3 cycles.

Le déchet (W2.1) qui a été minéralisé dans l'étape de minéralisation est transféré dans une cuve amont (T3.1).

Chaque cycle à réaliser comprend au moins une étape (A3.1.a) d'ajout de charbon actif et de zéolithe dans les déchets contenus dans la cuve amont (T3.1). De façon non limitative, on ajoute de 0,1 g à 10 g de charbon actif pour 1 L de déchet et de 0,05 g à 10 g de zéolithe pour 1 L de déchet. Typiquement, on ajoute 0,1 g de zéolithe pour 1 kg de déchets et 1 g de charbon actif pour 1 kg de déchets.

Le cycle comprend en outre une étape de mélange ou d'agitation dans la cuve amont (T3.1) du charbon actif, de la zéolithe et des déchets pendant une durée allant de 10 min à 3 h pour obtenir une solution (W3.1) comprenant première partie (W3.2) solide précipitée et une partie (W3.3) liquide.

Le cycle comprend en outre une étape de séparation de la première partie (W3.2) solide et de la partie (W3.3) liquide. La séparation peut être une décantation envisageable au moins pour la zéolithe. La séparation peut être une filtration à travers un filtre (F3.1) en passant de la cuve amont (T3.1) vers une cuve aval (T3.2). Le filtre (F3.1) est par exemple un filtre régénérable avec une porosité maximum de 50 µm, de préférence de 10 µm. La porosité dépend de la granulométrie de la zéolithe. Après chaque filtration, le filtre est nettoyé par un contre flux (DW3.1 a) d'eau distillée.

Après chaque séparation, la partie liquide obtenue est éventuellement transférée (W3.4) de la cuve aval (T3.2) vers la cuve amont (T3.1) pour recommencer un autre cycle.

La première partie (W3.2) solide est ajoutée aux déchets secondaires (W5.1)

La boue (W3.2a) récupérée lors du nettoyage du filtre est aussi ajoutée aux déchets secondaires (W5.1).

Outre le césium et une partie du cobalt, quelques radioéléments non solubles à un pH de 4 sont extraits de la solution tels que le strontium 90 qui précipite avec le sulfate et une partie du fer 55, insoluble à pH 4 s'il est à la valence 3.

Dans une deuxième configuration, l'étape d'extraction des radioéléments est une étape de d'absorption en colonne comprenant au moins une étape de passage des déchets (W2.1) par au moins une première colonne (C3.1) et une deuxième colonne (C3.2) successives contenant du charbon actif pour absorber les composés organiques résiduels qui n'ont pas été minéralisés lors de l'étape (1) de minéralisation.

L'étape d'absorption comprend en outre une étape de passage des déchets par au moins une troisième colonne (C3.3) et une quatrième colonne (C3.4) successives contenant de la zéolithe pour absorber le césium. Cette étape suit une étape où les déchets (W3.1 b) traités par le passage dans la première colonne (C3.1) et la deuxième colonne (C3.2) sont transférés vers la troisième colonne (C3.3).

L'étape d'absorption comprend également une étape de détection de la saturation du charbon actif contenu dans la première colonne (C3.1) par un premier système de détection. Ce système de détection permet de détecter la présence de composés organiques qui passent dans un conduit qui amène les déchets (W3.1a) de la première colonne (C3.1) à la deuxième colonne (C3.2). Si des composés organiques sont détectés, cela veut dire que le charbon actif de la première colonne (C3.1) est saturé et donc qu'il n'est plus capable d'absorber les composés organiques. Lorsque des composés organiques sont détectés, la deuxième colonne (C3.2) remplace la première colonne par, par exemple, un système de vannage ou par un remplacement physique. La première colonne (C3.1) est alors vidée du charbon actif saturé pour recevoir une nouvelle charge de charbon actif non saturé. Le charbon actif saturé est ajouté aux déchets secondaires (W5.1), par exemple, par manutention sous écran biologique ou par entraînement par flux d'eau distillée.

L'étape d'absorption comprend également une étape de détection de la saturation de la zéolithe contenue dans la troisième colonne (C3.2) par un deuxième système de détection. Ce système de détection permet de détecter la présence de césium qui passe dans un conduit qui amène les déchets (W3.1 c) de la troisième colonne à la quatrième colonne. Si du césium est détecté, cela veut dire que la zéolithe de la troisième colonne (C3.3) est saturée et donc qu'elle n'est plus capable d'absorber le césium. Lorsque du césium est détecté, la quatrième colonne (C3.4) remplace la troisième colonne (C3.3), par exemple, par un système de vannage ou par un remplacement physique. La troisième colonne (C3.3) est alors vidée de la zéolithe saturée pour recevoir une nouvelle charge de zéolithe non saturée. La zéolithe saturée est ajoutée aux déchets secondaires (W5.1), par exemple, par manutention sous écran biologique ou par entraînement par flux d'eau.

Dans d'autres modes de réalisation, la zéolithe utilisée dans la première et/ou la deuxième configuration est remplacée par un sel de ferricyanure tel que le bleu de Prusse ou le ferricyanure ferrique (Fe₇(CN)₁₈) ou le KFeCo(CN)₆. Ces composés permettent d'insolubiliser le césium de manière sélective par piégeage de ce dernier dans leur matrice cristalline.

Dans ces modes de réalisation, pour un fonctionnement en cuves de la première configuration, l'étape d'extraction est une étape de précipitation comprenant au moins un cycle d'extraction du césium et de composants organiques résiduels qui n'ont pas été minéralisés par l'étape de minéralisation. En outre, le sel de ferricyanure est directement synthétisé dans le mélange de déchets et de charbon actif dans la cuve amont (T3.1).

Le cycle d'extraction comprend une étape (A3.1.a) d'ajout du charbon actif dans les mêmes proportions que pour le mode avec de la zéolithe et une étape d'ajout ou de synthèse de sel de ferricyanure dans les déchets contenus dans une cuve amont (T3.1). Le cycle d'extraction comprend en outre une étape de mélange ou d'agitation dans la cuve amont (T3.1) du charbon actif, du sel de ferricyanure et des déchets pour obtenir une première partie solide précipitée et une partie liquide. L'étape de mélange ou d'agitation est réalisée pendant une durée allant de 10 min à 10 h. Le cycle d'extraction comprend en outre une étape de séparation de la première partie solide et de la partie liquide. La première partie solide est ajoutée aux déchets secondaires (W5.1) et la partie liquide est transférée dans une cuve aval (T3.2). La partie liquide est éventuellement réintroduite dans la cuve amont (T3.1) pour un autre cycle d'extraction en tant que déchets. Le nombre de cycles est déterminé selon la quantité de composés organiques et de césium en sortie de chaque cycle.

L'étape de synthèse du sel de ferricyanure est faite directement dans le mélange de déchet et de charbon actif dans la cuve amont (T3.1).

Par exemple, si le sel de ferricyanure est du bleu de Prusse, l'étape de synthèse comprend une étape d'ajout de 0,05 g à 10 g, de préférence 0,1 g, de K₃Fe(CN)₆ par litre de déchet. L'étape de synthèse comprend en outre une étape d'ajout de sel de cobalt à la stoechiométrie pour former du KCoFe(CN)₆ qui précipite en entraînant le césium.

Dans ces modes de réalisation, pour un fonctionnement en colonne de la deuxième configuration, il est nécessaire de créer un matériau composite parce que les sels de ferricyanure tels que le bleu de Prusse ou ses analogues ne possèdent pas une résistance à la compression suffisante pour être chargés dans une colonne. Le matériau composite est, par exemple, un échangeur d'ion sélectif CsTreat® commercialisé par « *Fortum* »*.* Pour les analogues au bleu de Prusse, ce type de matériau est instable aux pH extrêmes mais fonctionne jusqu'à au moins une valeur de pH de 8 ou même de 10 selon nos essais.

L'étape de d'extraction des radioéléments contenus dans les déchets comprend en outre une étape d'extraction du strontium 90 et d'autres radioéléments contenus dans les déchets après les cycles d'extraction du césium et des composés organiques résiduels ou après le passage sur colonnes.

Le seuil à partir duquel il faut traiter le ⁹⁰Sr est défini par Euratome 2013/59: 100 Bq/kg dixième seuil de libération. Dans le cas de la décatégorisation, il est défini par les critères TFA : 100 Bq/g.

Les autres radioéléments concernent essentiellement le ⁶³Ni, le ⁶⁰Co et des actinides.

La solution de déchets obtenue après les cycles d'extraction du césium et des composés organiques résiduels ou obtenue après le passage sur colonnes est dans la cuve amont (T3.1) dans laquelle est ajoutée de l'oxyde de baryum ou de l'hydroxyde de baryum (A3.1b) ou de l'oxyde de calcium ou de l'hydroxyde de calcium ou un mélange de ces éléments. On obtient alors une deuxième partie solide précipitée de sulfate de baryum et de carbonate de baryum ou de sulfate de calcium et de carbonate de calcium ou un mélange de ces composés entraînant un co-précipité de strontium 90. La deuxième partie solide est ajoutée aux déchets secondaires (W5.1).

Le sulfate de baryum et le carbonate de baryum sont précipités selon les équations suivantes :

Ba(OH)₂ + SO₄²⁻ → BaSO₄ + 2OH⁻

Ba(OH)₂ + CO₂ → BaCO₃ + H₂O

Dans ce cas, le sulfate de baryum se forme à partir du sulfate présent dans le déchet brut. Mais, il peut y avoir des cas où l'on est amené à ajouter un sel de sulfate, par exemple, sous forme d'acide sulfurique ou de sulfate de sodium, si les déchets ne comportent pas assez de sulfate.

De façon non limitative, la quantité de précipité de sulfate de baryum varie de 1 g à 50 g pour 1 L de déchet.

La quantité des précipités de carbonate sont déterminées par la composition du déchet brut.

L'étape d'extraction du strontium 90 et d'autres radioéléments comprend en outre une étape d'ajustement du pH à 10 par ajout de base (A3.1.b).

La base est par exemple du NaOH avec l'équation suivante :

8H₃BO₃ + 6OH⁻ → B₄O₇²⁻ + 4BO₂⁻ + 15H₂O

L'étape d'extraction du strontium 90 et d'autres radioéléments comprend en outre une étape de séparation par filtration avec le même filtre que le filtre lors du cycle d'extraction du césium et des composés organiques résiduels.

Les équations chimiques présentées ci-dessus sont simplifiées. En fait, il est préférable de d'abord augmenter le pH vers 9, avec NaOH, puis de précipiter sulfate et carbonate, et enfin d'ajuster le pH à 10 avec NaOH. La raison est qu'à pH faible, la précipitation des carbonates risque d'être très lente, ceux-ci étant sous forme acide ou bicarbonate.

Après la filtration, le filtre (F3.1) est nettoyé par un contre flux (DW3.1 b) d'eau distillée. La boue (W3.2b) en résultant est transférée aux déchets secondaires (W5.1).

Notons que le carbonate et le sulfate de baryum sont lourds et décantent très bien. Il est envisageable de remplacer le filtre par une séparation liquide/solide par décantation.

Tant que le pH est au-dessous de 7, des restes de CO₂ peuvent encore dégazer.

La précipitation du BaSO₄ entraîne le Sr résiduel par co-précipitation.

En fonction du procédé de conditionnement du déchet secondaire (W5.1) envisagé, le baryum peut être remplacé par du calcium, mais pas complètement, afin de co-précipiter les résidus de strontium.

Calcium et baryum s'intègrent bien dans une matrice cimentaire. Si par contre on envisage un conditionnement par procédé thermique, le calcium est a *priori* préférable au baryum, parce que les températures de fusion sont plus faibles.

L'étape d'extraction comprend en outre au moins un cycle d'extraction de l'iode 129 contenu dans les déchets.

Le seuil à partir duquel il faut traiter l'iode 129 défini par Euratom 2013/59 est très faible : 10 Bq/kg. Si on prend le dixième du seuil comme référence, c'est à partir de 1 Bq/kg qu'il faut prendre en compte ce radioélément.

Le cycle d'extraction de l'iode 129 comprend une étape d'ajout d'iode non radioactif sous forme soluble en mélange d'iodure (I⁻) et d'iodate (IO₃⁻) dans les déchets contenus dans la cuve amont (T3.1). Ces deux composés précipitent bien avec le plomb. Le mélange est par exemple de Nal + NaIO₃ ou KI + KIO₃ en quantité par exemple égale à 10mM ou 10 mmol par litre de déchet.

Le cycle d'extraction de l'iode 129 comprend en outre une étape d'ajout de plomb non radioactif sous forme soluble par exemple du Pb(NO₃)₂ ou un autre sel soluble. Cet ajout est réalisé en quantité stoechiométrique, de façon non limitative, dans une quantité allant de 1 mM à 100 mM, soit par exemple 5 mM dans les déchets. Cet ajout est réalisé à un pH des déchets inférieur à 5, de préférence inférieur à 4, afin d'éviter la précipitation d'hydroxyde de plomb. Il est avantageux de réalisé cette étape dans le cuve amont (T3.1).

On obtient une partie liquide et une troisième partie solide précipitée comprenant de l'iodure de plomb et de l'iodate de plomb qui entraînent l'iode 129. Le facteur de décontamination est d'environ 100 et peut être ajusté par les concentrations d'iode er de plomb non radioactif. Plus les concentrations sont élevées, plus le facteur de décontamination est élevé.

L'étape d'extraction de l'iode 129 comprend en outre une étape de séparation par filtration une étape de séparation par filtration de la troisième partie solide et de la partie liquide avec le même filtre que le filtre lors du cycle d'extraction du césium et des composés organiques résiduels.

La troisième partie solide est ajoutée aux déchets secondaires (W5.1) et la partie liquide étant transférée dans la cuve aval (T3.2).

La partie liquide étant éventuellement réintroduite dans la cuve amont (T3.1) pour un autre cycle d'extraction de l'iode 129 en tant que déchets. Il est possible de réaliser autant de cycles d'extraction d'iode 129 que de cycles d'extraction du césium.

L'argent peut être utilisé à la place du plomb mais est plus onéreux. Cependant, il est ajouté en moindre de concentration, de façon non limitative, dans une quantité allant de 0,1 mM à 1 mM, soit par exemple à 0,1 mM avec un pH des déchets inférieur à 9, parce qu'il est plus efficace au moins pour l'iodure. Le baryum est utilisé par ailleurs et est efficace sur l'iodate.

Selon une configuration, l'étape d'extraction comprend en outre un cycle d'extraction de métaux de transition résiduels tels que le cobalt, le nickel et le fer contenus dans les déchets après le cycle d'extraction du strontium 90 et d'autres radioéléments.

Le cycle d'extraction de métaux de transition comprend une étape (A3.2) d'ajout d'un composé de soufre dans les déchets pour obtenir une solution comprenant une partie (W3.7) liquide et une quatrième partie (W3.6) solide précipitée des métaux de transition résiduels dans la cuve aval (T3.2). Le composé du soufre est par exemple un sel trisodique de trimercapto-s-triazine ou TMT15® ou un équivalent tel que le sulfure de sodium Na₂S. De façon non limitative, la quantité ajoutée de TMT15® varie de 0,1 g à 10 g pour 1 L de déchet. Par exemple, la quantité est de 0,1 g pour 1 kg de déchets.

Le cycle d'extraction de métaux de transition comprend en outre une étape de filtration ou de suspension de la quatrième partie solide et d'une partie liquide. Le filtre (F3.2) utilisé est un ultrafiltre régénérable avec une porosité maximale de 0,1 µm. Après chaque filtration, le filtre (F3.2) est nettoyé par un contre flux (DW3.2) d'eau distillée. La boue résultant du nettoyage est transférée aux déchets secondaires (W5.1).

À un pH de 10, une partie du plutonium contenu dans les déchets est sous forme colloïdale et échappe donc à la précipitation. La très faible porosité du filtre permet de piéger ce plutonium colloïdal. Selon le facteur de décontamination visé pour les actinides, il peut être nécessaire d'ajouter une étape de nanofiltration avec un filtre de porosité maximale de 0,01 µm.

L'ultrafiltre et le nanofiltre sont des filtres tangentiels à membrane.

La partie (W3.7) liquide résultant de cette étape est le concentrat de déchets décontaminés.

Selon une configuration, l'extraction du césium peut être réalisée par un autre moyen que par la zéolithe ou les sels de ferricyanure.

L'extraction du césium peut être réalisée avant le cycle d'extraction de métaux de transition et comprend une étape d'ajout de tétraphénylborate de sodium dans les déchets pour obtenir une partie solide comprenant du césium et une partie liquide et une étape de séparation de la partie solide et d'une partie liquide. La partie solide comprenant du césium est ajoutée aux déchets secondaires (W5.1). La partie liquide est éventuellement réintroduite dans le cycle d'extraction du césium en tant que déchet ou est introduite dans le cycle d'extraction de métaux de transition.

De façon non limitative, la quantité ajoutée de tétraphénylborate varie de 0,05 g à 10 g par litre de déchet.

### 4. Évaporation, cristallisation, condensation

Le procédé comprend en outre une étape (3) d'évaporation dans laquelle la partie liquide obtenue suite à l'étape d'extraction est évaporée pour obtenir un solide (W4.1) composé de sels et de boue séchée.

Le caractère de siccité à atteindre doit permettre de qualifier le produit final de solide ou de boue pelletable. 35% de siccité est un minimum. 75% de siccité est ce qui est recherché.

La vapeur issue de l'évaporation est condensée en eau (DW4.1) distillée pour être réutilisée dans le procédé, par exemple pour nettoyer les filtres.

### 5. Cimentation

Le procédé comprend en outre une étape (4) de cimentation des déchets secondaires (W5.1) comprenant une étape de concentration des déchets secondaires (W5.1) par évaporation et/ou mécaniquement jusqu'à ce que la teneur en eau contenue dans les déchets secondaires (W5.1) atteigne une valeur correspondant à la formulation d'un ciment. Par exemple, la teneur en eau doit être environ de 10% de la masse de produit final cimenté.

L'eau (DW5.1) issue de la concentration est réutilisée dans le procédé. S'il s'agit de vapeur issue d'évaporation, elle est au préalable condensée éventuellement dans le condenseur utilisé pour la condensation de l'eau (DW4.1) issue de l'évaporation de la partie liquide des déchets décontaminés.

Une préparation cimentaire (A5.1) est alors ajoutée pour cimentation.

En alternative à la cimentation, on peut proposer un traitement thermique, par exemple un procédé de conditionnement sous forme de roche synthétique comme dans le document FR 2 943 835, avec l'avantage de réduire encore le volume du déchet secondaire (W5.1), et l'inconvénient de nécessiter un investissement plus important.

Cette alternative n'est économiquement viable que si le procédé thermique est utilisé également pour d'autres flux de déchets que le concentrat d'évaporateur.

### 6. Radioéléments traités

Le procédé décrit ci-dessus permet d'extraire l'essentiel des éléments possédant des isotopes radioactifs significatifs : Cs, Co, Sr, Ni, Mn, Nb, Eu, Zn, Cd, Sn, I, actinides, soit parce qu'une étape du procédé s'adresse spécifiquement à eux, soit parce qu'ils sont insolubles à pH 10.

Il reste néanmoins quelques radioéléments susceptibles de ne pas être traités par le procédé en l'état : ⁹⁹Tc, ¹²⁵Sb. Ces radioéléments ne présentent en général pas une activité supérieure aux seuils de déclassement ou décatégorisation. Néanmoins, si cela était le cas, le procédé pourrait être aisément complété, au moins pour le ¹²⁵Sb par précipitation avec le fer. Le cas du ⁹⁹Tc est plus délicat et nécessiterait une étape de réduction par un traitement au thiosulfate ou autre réducteur avant précipitation.

### 7. Carbone 14

Le rejet ou non du carbone 14 dépend du concentrat qui est traité.

Dans la suite, nous décrirons différents cas.

Le cas du carbone 14 est complexe. Il doit être traité en fonction des autorisations de rejet, des quantités de ¹⁴C présent dans le déchet, de la quantité de carbone total présent dans le déchet.

Si l'autorisation de rejet permet le rejet du carbone 14 présent, on a intérêt à rejeter le CO₂ sous forme gazeuse, pour réduire le volume du déchet radioactif solide. Il est alors avantageux de réaliser une ozonation à pH inférieur à 7, de préférence inférieur ou égal à 4. En effet, à pH faible, le carbone minéral en solution est essentiellement sous forme acide (CO₂), et dégaze naturellement. Le dégazage est accéléré par stripping, c'est-à-dire par bullage d'un gaz d'entraînement (air, azote ou autre) à travers la solution. Or il se trouve qu'un effet secondaire de l'ozonation est de réaliser un stripping de la solution.

Si par contre l'autorisation de rejet ne permet pas le rejet du ¹⁴C présent, on a intérêt à réaliser l'ozonation à pH supérieur à 8, de préférence supérieur à 9, afin de garder le CO₂ en solution. Sauf si le ¹⁴C est majoritairement sous forme minérale ou organique. L'objectif est alors de provoquer le dégazage du CO₂ au moment opportun, afin de rejeter le CO₂ faiblement contaminé en ¹⁴C, et de garder en solution sous forme de carbonate le CO₂ fortement contaminé en ¹⁴C.

Il est clair par ailleurs que si la quantité de carbone total présent dans le déchet est faible, il n'est pas nécessaire de se préoccuper du dégazage ou non du CO₂, on peut conserver la totalité du carbone sans que le volume de déchet secondaire (W5.1) final n'en soit trop affecté.

Pour donner des ordres de grandeur :
- un rejet de ¹⁴C dans l'atmosphère peut être considéré comme significatif à partir de 1 GBq/an (un réacteur nucléaire français, de type REP, rejette typiquement 200 GBq/an). Mais il faut rester prudent sur ce type d'ordre de grandeur, parce que l'autorisation de rejet d'une installation donnée dépend des besoins de cette installation, et une installation d'entreposage de déchet aura par exemple une autorisation de rejet bien moindre que celle d'un réacteur nucléaire. Or c'est par rapport à l'autorisation de rejet de l'installation où l'on opère qu'il faut se caler, même si un rejet de 1 GBq/an n'a aucun impact sanitaire
- à partir de 0,1 g de carbone total par kg de déchet brut (0,01 mol/kg), il devient intéressant de dégazer le CO₂, si possible.
- la concentration en ¹⁴C dans le déchet à partir de laquelle il est nécessaire d'extraire ce radioélément du concentrat, est autour de 100 Bq/kg, dixième du seuil de libération (déclassement) donné par Euratom 2013/59. Ou, pour une décatégorisation le seuil est plutôt autour de 100 Bq/g par rapport aux critères d'acceptation TFA.

### 7.1. Teneur du concentrat en carbone 14 faible

On considère que le concentrat brut est un concentrat sec, solide. Cela ne restreint pas l'application aux concentrats présentant cette caractéristique, étant donné que l'étape de préparation du procédé consiste à diluer ce concentrat sec.

Le concentrat présenté ici est relativement vieilli, de 10 à 20 ans après l'arrêt du réacteur, ne comporte donc plus de quantités significatives de radioéléments à vie courte (⁵⁷Co, ⁵⁴Mn,...) et comporte une teneur importante en ¹³⁷Cs, due à des incidents sur des gaines de combustible.

Il est très chargé en carbone, aussi bien minéral qu'organique. L'autorisation de rejet du ¹⁴C est donc essentielle pour la minimisation du déchet final.

Ce concentrat est produit par un réacteur nucléaire européen, hors France. L'objectif de la décontamination est donc de déclasser, c'est-à-dire, rendre non radioactif, au sens de la Directive 2013/59/Euratome par exemple, la réglementation locale étant prioritaire, le concentrat. Il faut alors obtenir un facteur de décontamination élevé pour le Cs, avec 3 cycles zéolithe, et diminuer la teneur en iode radioactif, le seuil d'exemption de la 2013/59 pour l'iode 129 étant très faible, ce qui est obtenu par précipitation à pH 4, avec le plomb présent dans les impuretés.

La densité du concentrat est d'environ : 1,5 g/cm³ avec un pH égal à 10 que l'on obtient lorsque l'on dilue le concentrat dans l'eau distillée, sans ajout.

La composition chimique est représentée dans le tableau suivant.

| **Concentrations par kg de concentrat brut** | | |
|---|---|---|
| | mol/kg | g/kg |
| Fluorescéine C₂₀H₁₀O₅Na₂ | 0,175 | 65,8 |
| Borax Na₂B₄O₇ | 0,375 | 75,5 |
| Metaborate NaBO₂ | 1,5 | 98,7 |
| NaHCO₃ | 3 | 252,0 |
| K₂SO₄ | 0,1 | 17,4 |
| KCI | 0,2 | 14,9 |
| KNO₃ | 2 | 202,2 |
| KNO₂ | 0,2 | 17,0 |
| Impuretés | | 30,0 |
| Eau (QSP) | | 226,4 |

Comme indiqué précédemment, la fluorescéine est choisie pour représenter une grande diversité de molécules organiques.

Au pH de 10, les borates sont sous forme d'un mélange de tétraborate et de métaborate.

Au pH 10, les carbonates sont majoritairement sous forme bicarbonate.

Comme indiqué au début de la description, les impuretés sont constituées de nombreux composés et sels.

Bien que le concentrat soit qualifié de sec, il contient quand même de l'eau, notamment l'eau d'hydratation des borates : Na₂B₄O₇.(H₂O)₁₀, NaBO₂.(H₂O)₄.

Selon la chimie du circuit primaire, on trouvera dans la composition des ions lithium en remplacement d'une partie des ions potassium et sodium. Cela n'a pas d'influence notable sur le procédé. D'une manière plus générale la répartition des ions alcalins sur Li⁺, Na⁺ et K⁺ n'a pas d'influence notable sur le procédé.

La composition radiologique est représentée dans le tableau suivant.

| **Activités par kg de concentrat brut** | |
|---|---|
| Radioélément | Bq/kg |
| 134⁺¹³⁷ Cs | 1^{E}7 |
| ⁵⁷⁺⁵⁸⁺⁶⁰Co | 3^{E}5 |
| ⁶³Ni | 1^{E}6 |
| ⁵⁵Fe | 5^{E}4 |
| ⁹⁰Sr | 5^{E}4 |
| ¹⁴C | 5^{E}4 |
| ⁹⁴Nb | 1^{E}3 |
| ⁹⁹Tc | 1^{E}2 |
| ¹²⁹I | 1^{E}1 |
| U | 1^{E}1 |
| Alpha - Pu | 5^{E}3 |
| ²⁴¹Pu | 1,5^{E}4 |

Le bilan de masse durant le procédé est représenté dans le tableau suivant.

| | **Bilan de masse procédé, en kg ou moles par tonne de concentrat brut** | | | | | | | | | | | |
|---|---|---|---|---|---|---|---|---|---|---|---|---|
| | Total | B | C org. | C min | SO₄⁼ | Cl⁻ | NO₃⁻ | NO₂⁻ | Na⁺ | K⁺ | Impur. | Eau |
| | kg/T | mol/T | mol/T | mol/T | mol/T | mol/T | mol/T | mol/T | mol/T | mol/T | kg/T | kg/T |
| W0 | 1000 | 3000 | 3000 | 3 500 | 100 | 200 | 2 000 | 200 | 5600 | 2600 | 30 | 226 |
| W1.1 | 6683 | 3000 | 30 | 3 500 | 100 | 200 | 7 600 | 200 | 5600 | 2600 | 30 | 5681 |
| W2.1 | 6649 | 3000 | 65 | 41 | 100 | 200 | 7 800 | 0 | 5600 | 2600 | 30 | 5 700 |
| W3.3 (3^{ième} passage) | 6586 | 3000 | 65 | 0 | 100 | 200 | 7 800 | 0 | 5600 | 2600 | 10 | 5657 |
| W3.3 (4^{ième} passage) | 6610 | 3000 | 0 | 0 | 0 | 200 | 7 800 | 0 | 7650 | 2600 | 3,0 | 5716 |
| W3.7 | 6609 | 3000 | 0 | 0 | 0 | 200 | 7 800 | 0 | 7650 | 2600 | 3,0 | 5716 |
| W4.1 | 1188 | 3000 | 0 | 0 | 0 | 200 | 7 800 | 0 | 7650 | 2600 | 3,0 | 294 |

Le bilan de masse de cimentation est représenté dans la tableau suivant.

| **Bilan de masse cimentation, en kg par tonne de concentrat brut** | | | | |
|---|---|---|---|---|
| | Total | Contenu sec | Eau | Ciment |
| W3.2a | 213 | 43 | 170 | |
| W3.2.b | 215 | 43 | 172 | |
| W3.6 | 3,31 | 0,66 | 2,64 | |
| W5.1 | 587 | 86 | 43 | 458 |

Le bilan d'activité durant le procédé est représenté dans le tableau suivant.

| **Bilan d'activité procédé, en Bq par tonne de concentrat brut** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W0 | 1,0E+10 | 3,0E+08 | 1,OE+09 | 5,0E+07 | 5,0E+07 | 5,0E+07 | 1,0E+06 | 1,0E+05 | 1,0E+04 | 1,0E+04 | 5,0E+06 | 1,5E+07 |
| W2.1 | 1,0E+10 | 3,0E+08 | 1,0E+09 | 5,0E+07 | 5,0E+07 | 1,1E+06 | 1,0E+06 | 1,0E+05 | 1,0E+04 | 1,0E+04 | 5,0E+06 | 1,5E+07 |
| W3.3 (3^{è} passe) | 1,0E+04 | 3,0E+08 | 1,OE+09 | 5,0E+02 | 5,0E+02 | 4,9E+05 | 1,0E+01 | 1,0E+05 | 1,0E+03 | 1,0E-01 | 5,0E+01 | 1,5E+02 |
| W4.1 | 1,0E+04 | 3,0E+03 | 1,0E+04 | 5,0E+02 | 5,0E+02 | 4,9E+00 | 1,0E+01 | 1,0E+05 | 1,0E+03 | 1,0E-01 | 5,0E+01 | 1,5E+02 |

| **Bilan d'activité cimentation, en Bq par tonne de concentrat brut** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W3.2.a | 1,0E+10 | 0,0E+00 | 0,0E+00 | 5,0E+07 | 5,0E+07 | 5,8E+05 | 1,0E+06 | 0,0E+00 | 9,0E+03 | 1,0E+04 | 5,0E+06 | 1,5E+07 |
| W3.2.b+W3.6 | 0,0E+00 | 3,0E+08 | 1,0E+09 | 0,0E+00 | 0,0E+00 | 4,9E+05 | 0,0E+00 | 0,0E+00 | 0,0E+00 | 0,0E+00 | 0,0E+00 | 0,0E+00 |
| W5.1 | 1,0E+10 | 3,0E+08 | 1,0E+09 | 5,0E+07 | 5,0E+07 | 1,1E+06 | 1,0E+06 | 0,0E+00 | 9,0E+03 | 1,0E+04 | 5,0E+06 | 1,5E+07 |

| **Activité du concentrat décontaminé (W4.1), en Bq/kg** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W4.1 | 8,42E+00 | 2,52E+00 | 8,42E+00 | 4,21E-01 | 4,21E-01 | 4,16E-03 | 8,42E-03 | 8,42E+01 | 8,42E-01 | 8,42E-05 | 4,21E-02 | 1,26E-01 |
| Euratom 13/59 (*) | 100 | 100 | 1,00E+05 | 1,00E+06 | 1000 | 1000 | 100 | 1000 | 10 | 1000 | 100 | 1,00E+04 |
| Contribution (**) | 8, 42 E-02 | 2, 52 E-02 | 8, 42 E-O5 | 4,21E-07 | 4,21E-04 | 4,16E-06 | 8,42E-05 | 8,42E-02 | 8,42E-02 | 8,42E-08 | 4,21E-04 | 1,26E-05 |
| Total (***) | 0,279 | | | | | | | | | | | |

| | | | | | | | | | | | | |
|---|---|---|---|---|---|---|---|---|---|---|---|---|
| (*) : seuils de libération et d'exemption de la Directive 2013/59/Euratom, table A. (**) : pour chaque radioélément, la contribution est égale à l'activité divisée par le seuil. (***) : somme des contributions. Le concentrat décontaminé (W4.1) est considéré comme non radioactif si le total des contributions est inférieur à 1. | | | | | | | | | | | | |

Le tableau suivant représente le bilan en additifs ajoutés pendant le procédé et en eau.

| **Additifs et eau** | | | |
|---|---|---|---|
| Flux | Nature | moles/tonne | kg/tonne |
| A1.1 | HNO₃+H₂O | 5600 | 588 |
| DW1.1 | H₂O | | 5226 |
| A2.1 stoechiométrique | O₃ | 2430 | 117 |
| A2.1 réel | O₃ | 14 801 | 710 |
| A3.1.a | Zéolithe | | 1,99 |
| A3.1.a | Charbon actif | | 19,9 |
| DW3.1.a | H₂O | | 128 |
| A3.1.b | Ba(OH)₂ | 165 | 28 |
| A3.1.b | NaOH | 2050 | 82 |
| DW3.1.b | H₂O | | 129 |
| A3.2 | TMT15^{®} | | 0,66 |
| DW3.2 | H₂O | | 1,98 |
| A5.1 | Ciment | | 458 |
| DW5.1 | H₂O | | 302 |
| DW4.1 | H₂O | | 5 421 |

Le bilan d'eau (DW4.1+DW5.1-DW1.1-DW3.1.a-DW3.1.b-DW3.2) aboutit à une production nette de 238 kg/t.

Le concentrat est décontaminé, et peut être considéré comme non radioactif selon la Directive Européenne 2013/59, avec une marge de sécurité suffisante (critère = 0,279, pour une valeur requise inférieure à 1).

Le déchet secondaire (W5.1) consiste essentiellement en charbon actif et précipités de sulfate et carbonate de baryum. Les précipités se cimentent aisément. Le charbon actif s'incorpore dans la matrice cimentaire, à condition de convenablement malaxer le mélange.

Le déchet secondaire (W5.1) cimenté, acceptable en l'état par un centre de stockage de surface, représente 587 kg par tonne de concentrat brut, soit un facteur de réduction de volume de 2,7 par rapport au concentrat brut, alors qu'une cimentation directe de ce concentrat brut aboutirait à un facteur d'augmentation de volume de 4 ou 5.

L'activité du déchet secondaire (W5.1) cimenté est de 20 kBq/g, essentiellement en ¹³⁷Cs, ce qui reste compatible avec un stockage de surface.

Le procédé aboutit au rejet à l'atmosphère de la presque totalité de l'inventaire ¹⁴C, soit, par tonne de concentrat brut, un rejet de 49 MBq de ¹⁴C, dans 280 kg de CO₂. Ce rejet est normalement compatible avec les autorisations d'un site de production nucléaire, et ne présente pas d'impact significatif sur l'environnement. Le ¹⁴C est un radioélément naturellement présent dans l'atmosphère, et se disperse rapidement, sans risque de concentration.

### 7.2. Teneur du concentrât en carbone 14 élevée mais contenu en carbone faible

Dans ce cas, l'étape de minéralisation comprend une étape de maintien de la valeur de pH dans une plage de 8 à 10 par ajout de base.

Pour limiter le rejet en ¹⁴C, on s'interdit de diminuer le pH en-dessous de 8 ou 9.

En complément, il est possible de traiter les évents des cuves du procédé soit par lavage du gaz à la soude, soit par procédé solide, avec de la chaux vive (CaO). Dans le cas du lavage à la soude, on précipite le carbonate mis en solution avec de la chaux ou de l'oxyde de baryum, et le précipité (carbonate de calcium ou de baryum) est cimenté avec les autres flux de déchets secondaires (W5.1). Dans le cas du procédé sec, la chaux vive se transforme en carbonate de calcium lors de son utilisation, et est cimentée avec les autres flux de déchets secondaires (W5.1).

De plus, le cycle d'extraction du césium est réalisé pour des valeurs du pH comprises dans une plage de 8 à 10, la valeur de pH est remontée à 10 après le ou les cycles d'extraction du césium.

On considère que le concentrat brut est sec et solide.

Le concentrat présenté ici est relativement récent, de 2 à 5 ans après l'arrêt du réacteur, et comporte essentiellement des produits d'activation dont le principal est le ⁶⁰Co. On y trouve aussi des radioéléments à vie relativement courte : ⁵⁴Mn, ^{110m}Ag, ⁵⁷Co_{...}

Il est relativement peu chargé en carbone, aussi bien minéral qu'organique. Il contient par contre beaucoup de ¹⁴C, ce qui est plutôt exceptionnel.

Ce concentrat est produit par un réacteur nucléaire français. L'objectif de la décontamination est donc de décatégoriser le concentrat, c'est-à-dire, le passer de FMA VC à TFA. Les impératifs en termes de facteur de décontamination sont alors moins drastiques que pour le cas précédent. On se limite à deux cycles ferricyanure mieux adapté aux pH élevés et charbon actif. C'est d'ailleurs plus pour éliminer les complexes du Co que pour décontaminer le Cs que l'on met en oeuvre deux cycles. Pour les seuls besoins de décontamination en Cs, un seul cycle serait suffisant.

La densité du concentrat est d'environ 1,5 g/cm³ avec un pH égal à 10 que l'on obtient lorsque l'on dilue le concentrat dans l'eau distillée, sans ajout.

La composition chimique est représentée dans le tableau suivant.

| **Concentrations par kg de concentrat brut** | | |
|---|---|---|
| | mol/kg | g/kg |
| Fluorescéine C₂₀H₁₀O₅Na₂ | 0,02 | 7,5 |
| Borax Na₂B₄O₇ | 1 | 201,2 |
| Metaborate NaBO₂ | 4 | 263,2 |
| NaHCO₃ | 0,3 | 25,2 |
| K₂SO₄ | 0,1 | 17,4 |
| KCI | 0,02 | 1,5 |
| KNO₃ | 2 | 202,2 |
| KNO₂ | 0,2 | 17,0 |
| Impuretés | | 30,0 |
| Eau (QSP) | | 234,7 |

La composition radiologique est représentée dans le tableau suivant.

| **Activités par kg de concentrat brut** | |
|---|---|
| Radioélément | Bq/kg |
| 134⁺¹³⁷ Cs | 2^{E}5 |
| ⁵⁷⁺⁵⁸⁺⁶⁰Co | 7^{E}6 |
| ⁶³Ni | 3^{E}6 |
| ^{110m}Ag | 1^{E}5 |
| ⁹⁰Sr | 1^{E}5 |
| ¹⁴C | 5^{E}5 |
| ⁵⁴Mn | 2^{E}4 |
| ⁹⁹Tc | 1^{E}2 |
| ¹²⁹I | 1^{E}₁ |
| U | 1^{E}1 |
| Alpha - Pu | 5^{E}3 |
| ²⁴¹Pu | 1,5^{E}4 |

Présent dans le cas précédent (7.2), le ⁹⁴Nb ne figure ici pas dans la table. Il n'est pas absent, mais ne constitue par un problème.

Le bilan de masse durant le procédé est représenté dans le tableau suivant.

| | **Bilan de masse procédé, en kg ou moles par tonne de concentrat brut** | | | | | | | | | | | |
|---|---|---|---|---|---|---|---|---|---|---|---|---|
| | Total | B | C org. | C min | SO₄⁼ | Cl⁻ | NO₃⁻ | NO₂⁻ | Na⁺ | K⁺ | Impur. | Eau |
| | kg/T | mol/T | mol/T | mol/T | mol/T | mol/T | mol/T | mol/T | mol/T | mol/T | kg/T | kg/T |
| W0 | 1000 | 8000 | 300 | 400 | 100 | 20 | 2000 | 200 | 6340 | 2420 | 30,00 | 235 |
| W1.1 | 5 907 | 8000 | 300 | 400 | 100 | 20 | 6000 | 200 | 6340 | 2420 | 30,00 | 4 908 |
| W2.1 | 5936 | 8000 | 664 | 36 | 100 | 20 | 6200 | 0 | 6668 | 2420 | 30,00 | 4 909 |
| W3.3 (3^{ième} passage) | 5881 | 8000 | 664 | 0 | 100 | 20 | 6200 | 0 | 6664 | 2420 | 10,00 | 4876 |
| W3.3 (4^{ième} passage) | 5815 | 8000 | 0 | 0 | 0 | 20 | 6200 | 0 | 9 800 | 2420 | 3,00 | 4780 |
| W3.7 | 5814 | 8000 | 0 | 0 | 0 | 20 | 6200 | 0 | 9 800 | 2420 | 3,00 | 4780 |
| W4.1 | 1670 | 8000 | 0 | 0 | 0 | 20 | 6200 | 0 | 9 800 | 2420 | 3,00 | 635 |

Le bilan de masse de cimentation est représenté dans la tableau suivant.

| **Bilan de masse cimentation, en kg par tonne de concentrat brut** | | | | |
|---|---|---|---|---|
| | Total | Contenu sec | Eau | Ciment |
| W3.2a | 169 | 34 | 135 | |
| W3.2.b | 807 | 161 | 645 | |
| W3.6 | 2,91 | 0,58 | 2,33 | |
| W5.1 | 822 | 196 | 49 | 577 |

Le bilan d'activité durant le procédé est représenté dans le tableau suivant.

| **Bilan d'activité procédé, en Bq par tonne de concentrat brut** | | | | | | | | | | | | |
|---|---|---|---|---|---|---|---|---|---|---|---|---|
| | Cs | Co | ⁶³Ni | ^{110m}Ag | ⁹⁰Sr | ¹⁴C | ⁵⁴Mn | ⁹⁹Tc | ¹²⁹I | U | Alpha Pu | ²⁴¹Pu |
| W0 | 2,0E+08 | 7,0E+09 | 3,0E+09 | 1,0E+08 | 1,0E+08 | 5,0E+08 | 2,0E+07 | 1,0E+05 | 1,0E+04 | 1,0E+04 | 5,0E+06 | 1,5E+07 |
| W3.3 (3^{ième} passe) | 2,0E+04 | 7, 0 E+09 | 3,0E+09 | 1,0E+04 | 1,0E+04 | 4,7E+08 | 2,0E+07 | 1,0E+05 | 1,0E+04 | 1,0E+00 | 5,0E+02 | 1,5E+03 |
| W4.1 | 2,0E+04 | 7,0E+05 | 3,0E+05 | 1,0E+04 | 1,0E+04 | 4,7E+04 | 2,0E+03 | 1,0E+05 | 1,0E+04 | 1,0E+00 | 5,0E+02 | 1,5E+03 |

| **Bilan d'activité cimentation, en Bq par tonne de concentrat brut** | | | | | | | | | | | | |
|---|---|---|---|---|---|---|---|---|---|---|---|---|
| | Cs | Co | ⁶³Ni | ^{110m}Ag | ⁹⁰Sr | ¹⁴C | ⁵⁴Mn | ⁹⁹Tc | ¹²⁹I | U | Alpha Pu | ²⁴¹Pu |
| W3.2.a | 2,0E+08 | 0,0E+00 | 0,0E+00 | 1,0E+08 | 1,0E+08 | 2,6E+07 | 0,0E+00 | 0,0E+00 | 0,0E+00 | 1,0E+04 | 5,0E+06 | 1,5E+07 |
| W3.2.b+W3.6 | 0,0E+00 | 7,0E+09 | 3,0E+09 | 0,0E+00 | 0,0E+00 | 4,7E+08 | 2,0E+07 | 0,0E+00 | 0,0E+00 | 0,0E+00 | 0,0E+00 | 0,0E+00 |
| W5.1 | 2,0E+08 | 7,0E+09 | 3,0E+09 | 1,0E+08 | 1,0E+08 | 5,0E+08 | 2,0E+07 | 0,0E+00 | 0,0E+00 | 1,0E+04 | 5,0E+06 | 1,5E+07 |

| **Activité du concentrat décontaminé (W4.1), en Bq/g** | | | | | | | | | | | | |
|---|---|---|---|---|---|---|---|---|---|---|---|---|
| | Cs | Co | ⁶³Ni | ^{110m}Ag | ⁹⁰Sr | ¹⁴C | ⁵⁴Mn | ⁹⁹Tc | ¹²⁹I | U | Alpha Pu | ²⁴¹Pu |
| W4.1 | 1,20E-02 | 4,19E-01 | 1,80E-01 | 5,99E-03 | 5,99E-03 | 2,84E-02 | 1,20E-03 | 5,99E-02 | 5,99E-03 | 5,99E-07 | 2,99E-04 | 8,98E-04 |
| Seuil TFA | 10 | 10 | 1000 | 10 | 1000 | 1000 | 10 | 1000 | 1000 | 100 | 10 | 1000 |
| Contribution (**) | 1,20E-03 | 4,19E-02 | 1,80E-04 | 5,99E-04 | 5,99E-06 | 2,84E-05 | 1,20E-04 | 5,99E-05 | 5,99E-06 | 5,99E-09 | 2,99E-05 | 8,98E-07 |
| **Total(***)** | **0,044** | | | | | | | | | | | |

| | | | | | | | | | | | | |
|---|---|---|---|---|---|---|---|---|---|---|---|---|
| (*) : seuils individuels pour acceptation en stockage TFA en France. (**) : pour chaque radioélément, la contribution est égale à l'activité divisée par le seuil. (***) : somme des contribution. Le concentrat décontaminé (W4.1) est considéré comme TFA si le total des contributions est inférieur à 1. | | | | | | | | | | | | |

Le tableau suivant représente le bilan en additifs ajoutés pendant le procédé et en eau.

| **Additifs et eau** | | | |
|---|---|---|---|
| Flux | Nature | moles/tonne | kg/tonne |
| A1.1 | HNO₃+H₂O | 4000 | 420 |
| DW1.1 | H₂O | | 4487 |
| A2.1 stoechiométrique | O₃ | 315 | 15 |
| A2.1 réel | O₃ | 625 | 30 |
| A2.1 | NaOH | 328 | 13 |
| A3.1.a | Ferricyanure | | 1,19 |
| A3.1.a | Charbon actif | | 11,9 |
| DW3.1.a | H₂O | | 101 |
| A3.1.b | Ba(OH)₂ | 764 | 131 |
| A3.1.b | NaOH | 3136 | 125 |
| DW3.1.b | H₂O | | 484 |
| A3.2 | TMT15 | | 0,58 |
| DW3.2 | H₂O | | 1,74 |
| A5.1 | Ciment | | 577 |
| DW5.1 | H₂O | | 734 |
| DW4.1 | H₂O | | 4144 |

Le bilan d'eau (DW4.1+DW5.1-DW1.1-DW3.1.a-DW3.1.b-DW3.2) aboutit à une consommation nette de 196 kg/tonne.

Le concentrat est décontaminé, et peut être considéré comme TFA selon les critères d'acceptation en vigueur en France (critère = 0,044, pour une valeur requise inférieure à 1).

Le déchet secondaire (W5.1) consiste essentiellement en précipités de sulfate et carbonate de baryum, avec quelques 20% de charbon actif. Les précipités se cimentent aisément. Le charbon actif s'incorpore dans la matrice cimentaire, à condition de convenablement malaxer le mélange.

Le déchet secondaire (W5.1) cimenté, acceptable en l'état par un centre de stockage de surface, représente 822 kg par tonne de concentrat brut, soit un facteur de réduction de volume de 2,2 par rapport au concentrat brut, alors qu'une cimentation directe de ce concentrat brut aboutirait à un facteur d'augmentation de volume de 4 ou 5.

L'activité du déchet secondaire (W5.1) cimenté est de 13 kBq/g, essentiellement en ⁶⁰Co, ce qui est largement compatible avec un stockage de surface.

Le procédé aboutit au rejet à l'atmosphère d'une petite fraction de l'ordre de 1% de l'inventaire ¹⁴C, soit, par tonne de concentrat brut, un rejet de 5 MBq de ¹⁴C. Ce rejet inévitable est normalement compatible avec les autorisations d'un site de production nucléaire, et ne présente pas d'impact significatif sur l'environnement.

### 7.3. Teneur du concentrat en carbone 14 élevée mais principalement sous forme organique et teneur en carbone total élevée

Dans ce cas, l'étape de préparation comprend les étapes suivantes :
- une étape d'ajustement du pH des déchets à une valeur de 4 par ajout d'acide dans la cuve de préparation (T1.1),
- une étape de stripage du CO₂ à l'air ou à l'azote afin de dégazer et rejeter dans l'atmosphère le carbone minéral contenu dans les déchets,
- une étape pour remonter la valeur de pH des déchets dans une plage allant de 8 à 9.

Le concentrat brut est identique à celui du premier cas (7.1).

Le bilan de masse durant le procédé est représenté dans le tableau suivant.

| | **Bilan de masse procédé, en kg ou moles par tonne de concentrat brut** | | | | | | | | | | | |
|---|---|---|---|---|---|---|---|---|---|---|---|---|
| | Total | B | C org. | C min | SO4⁼ | Cl⁻ | NO₃⁻ | NO₂⁻ | Na⁺ | K⁺ | Impur. | Eau |
| | kg/T | mol/T | mol/T | mol/T | mol/T | mol/T | mol/T | mol/T | mol/T | mol/T | kg/T | kg/T |
| W0 | 1000 | 3000 | 3000 | 3 500 | 100 | 200 | 2000 | 200 | 5600 | 2600 | 30,00 | 226 |
| W1.1 | 6683 | 3000 | 30 | 3 500 | 100 | 200 | 7600 | 200 | 5600 | 2600 | 30,00 | 5681 |
| W2.1 | 6800 | 3000 | 3489 | 41 | 100 | 200 | 7 800 | 0 | 5600 | 2600 | 30,00 | 5700 |
| W3.3 (3^{ième} passage) | 6736 | 3000 | 3489 | 0 | 100 | 200 | 7 800 | 0 | 5600 | 2600 | 10,00 | 5656 |
| W3.3 (4^{ième} passage) | 5995 | 3000 | 0 | 0 | 0 | 200 | 7 800 | 0 | 7650 | 2600 | 3,00 | 5 102 |
| W3.7 | 5995 | 3000 | 0 | 0 | 0 | 200 | 7 800 | 0 | 7650 | 2600 | 3,00 | 5101 |
| W4.1 | 1188 | 3000 | 0 | 0 | 0 | 200 | 7 800 | 0 | 7650 | 2600 | 3,00 | 294 |

Le bilan de masse de cimentation est représenté dans la tableau suivant.

| **Bilan de masse cimentation, en kg par tonne de concentrat brut** | | | | |
|---|---|---|---|---|
| | Total | Contenu sec | Eau | Ciment |
| W3.2a | 216 | 43 | 172 | |
| W3.2.b | 3594 | 719 | 2876 | |
| W3.6 | 3,00 | 0,60 | 2,40 | |
| W5.1 | 2542 | 763 | 127 | 1652 |

Le bilan d'activité durant le procédé est représenté dans le tableau suivant.

| **Bilan d'activité procédé, en Bq par tonne de concentrat brut** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | 129₁ | U | Alpha Pu | ²⁴¹Pu |
| W0 | 1,0E+10 | 3,0E+08 | 1,0E+09 | 5,0E+07 | 5,0E+07 | 5,0E+07 | 1,0E+06 | 1,0E+05 | 1,0E+04 | 1,0E+04 | 5,0E+06 | 1,5E+07 |
| W3.3 (3^{ième} passe) | 1,0E+04 | 3,0E+08 | 1,0E+09 | 5,0E+02 | 5,0E+02 | 4,9E+07 | 1,0E+01 | 1,0E+05 | 1,0E+03 | 1,0E-01 | 5,0E+01 | 1,5E+02 |
| W4.1 | 1,0E+04 | 3,0E+03 | 1,0E+04 | 5,0E+02 | 5,0E+02 | 4,9E+02 | 1,0E+01 | 1,0E+05 | 1,0E+03 | 1,0E-01 | 5,0E+01 | 1,5E+02 |

| **Bilan d'activité cimentation, en Bq par tonne de concentrat brut** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W3.2.a | 1,0E+10 | 0,0E+00 | 0,0E+00 | 5,0E+07 | 5,0E+07 | 5,8E+05 | 1,0E+06 | 0,0E+00 | 9,0E+03 | 1,0E+04 | 5,0E+06 | 1,5E+07 |
| W3.2.b+W3.6 | 0,0E+00 | 3,0E+08 | 1,0E+09 | 0,0E+00 | 0,0E+00 | 4,9E+07 | 0,0E+00 | 0,0E+00 | 0,0E+00 | 0,0E+00 | 0,0E+00 | 0,0E+00 |
| W5.1 | 1,0E+10 | 3,0E+08 | 1,0E+09 | 5,0E+07 | 5,0E+07 | 5,0E+07 | 1,0E+06 | 0,0E+00 | 9,0E+03 | 1,0E+04 | 5,0E+06 | 1,5E+07 |

| **Activité du concentrat décontaminé (W4.1), en Bq/kg** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W4.1 | 8,42E+00 | 2,52E+00 | 8,42E+00 | 4,21E-01 | 4,21E-01 | 4,16E-01 | 8,42E-03 | 8,42E+01 | 8,42E-01 | 8,42E-05 | 4,21E-02 | 1,26E-01 |
| Euratom 13/59 (*) | 100 | 100 | 1,00E+05 | 1,00E+06 | 1000 | 1000 | 100 | 1000 | 10 | 1000 | 100 | 1,00E+04 |
| Contribution (**) | 8,42E-02 | 2,52E-02 | 8,42E-05 | 4,21E-07 | 4,21E-04 | 4,16E-04 | 8,42E-05 | 8,42E-02 | 8,42E-02 | 8,42E-08 | 4,21E-04 | 1,26E-05 |
| **Total (***)** | **0,279** | | | | | | | | | | | |

| | | | | | | | | | | | | |
|---|---|---|---|---|---|---|---|---|---|---|---|---|
| (*) : seuils de libération et d'exemption de la Directive 2013/59/Euratom, table A. (**) : pour chaque radioélément, la contribution est égale à l'activité divisée par le seuil. (***) : somme des contribution. Le concentrat décontaminé (W4.1) est considéré comme non radioactif si le total des contributions est inférieur à 1. | | | | | | | | | | | | |

Le tableau suivant représente le bilan en additifs ajoutés pendant le procédé et en eau.

| **Additifs et eau** | | | |
|---|---|---|---|
| Flux | Nature | moles/tonne | kg/tonne |
| A1.1 | HNO₃+H₂O | 5600 | 588 |
| DW1.1 | H₂O | | 5226 |
| A2.1 stoechiométrique | O₃ | 2430 | 117 |
| A2.1 réel | O₃ | 14 801 | 710 |
| A3.1.a | Ferricyanure | | 2,04 |
| A3.1.a | Charbon actif | | 20,4 |
| DW3.1.a | H₂O | | 129 |
| A3.1.b | Ba(OH)₂ | 3589 | 615 |
| A3.1.b | NaOH | 2050 | 82 |
| DW3.1.b | H₂O | | 2157 |
| A3.2 | TMT15 | | 0,60 |
| DW3.2 | H₂O | | 1,80 |
| A5.1 | Ciment | | 1652 |
| DW5.1 | H₂O | | 2923 |
| DW4.1 | H₂O | | 4 807 |

Le bilan d'eau (DW4.1+DW5.1-DW1.1-DW3.1.a-DW3.1.b-DW3.2) aboutit à une production nette de 216 kg/tonne.

Le concentrat est décontaminé, et peut être considéré comme non radioactif selon la Directive Européenne 2013/59, avec une marge de sécurité suffisante (critère = 0,279, pour une valeur requise inférieure à 1).

Le déchet secondaire (W5.1) consiste essentiellement en précipité de carbonate de baryum. S'ajoute à ce composant majoritaire des sulfates de baryum et un peu de charbon actif. Les précipités se cimentent aisément. Le charbon actif s'incorpore dans la matrice cimentaire, à condition de convenablement malaxer le mélange.

Le déchet secondaire (W5.1) cimenté, acceptable en l'état par un centre de stockage de surface, représente 2542 kg par tonne de concentrat brut, soit un facteur d'augmentation de volume de 1,27 par rapport au concentrat brut, alors qu'une cimentation directe de ce concentrat brut aboutirait à un facteur d'augmentation de volume de 4 ou 5.

L'activité du déchet secondaire (W5.1) cimenté est de 4,5 kBq/g, essentiellement en ¹³⁷Cs, ce qui est compatible avec un stockage de surface.

Le procédé aboutit au rejet à l'atmosphère d'une petite fraction de l'ordre de 1% de l'inventaire ¹⁴C, soit, par tonne de concentrat brut, un rejet de 0,5 MBq de ¹⁴C. Ce rejet inévitable est normalement compatible avec les autorisations d'un site de production nucléaire, et ne présente pas d'impact significatif sur l'environnement.

### 7.4. Teneur du concentrat en carbone 14 élevée mais principalement sous forme minérale, et teneur en carbone total élevée

Dans ce cas, l'étape de préparation comprend les étapes suivantes :
- une étape d'ajustement du pH des déchets à une valeur de 4 par ajout d'acide dans la cuve de préparation (T1.1),
- une étape de stripage du CO₂ à l'air ou à l'azote afin de dégazer le carbone minéral contenu dans les déchets, la cuve de préparation (T1.1) comprend des évents connecté à un dispositif de lavage à la soude ou à un filtre à chaux vive afin de capturer le carbone 14 contenu dans les déchets sous forme de carbonate de calcium ou de baryum, ce carbonate étant ajouté aux déchets secondaires (W5.1),
- une étape pour remonter la valeur de pH des déchets dans une plage allant de 8 à 9.

Dans une variante, l'étape de préparation comprend les étapes suivantes :
- une étape d'ajout de chlorure de baryum pour obtenir un précipité de carbonate de baryum,
- une étape d'ajout du carbonate de baryum aux déchets secondaires (W5.1).

Cette étape de préparation permet de séparer le carbone sous forme minérale avant l'ozonation.

Le concentrat brut est identique à celui du premier cas (7.1).

Le bilan de masse durant le procédé est représenté dans le tableau suivant.

| | **Bilan de masse procédé, en kg ou moles par tonne de concentrat brut** | | | | | | | | | | | |
|---|---|---|---|---|---|---|---|---|---|---|---|---|
| | Total | B | C org. | C min | SO₄⁼ | Cl⁻ | NO₃⁻ | NO₂⁻ | Na⁺ | K⁺ | Impur. | Eau |
| | kg/T | mol/T | mol/T | mol/T | mol/T | mol/T | mol/T | mol/T | mol/T | mol/T | kg/T | kg/T |
| W0 | 1 000 | 3 000 | 3 000 | 3 500 | 100 | 200 | 2 000 | 200 | 5600 | 2600 | 30 | 226 |
| W1.1 | 6683 | 3000 | 30 | 3 500 | 100 | 200 | 7600 | 200 | 5600 | 2600 | 30 | 5681 |
| W2.1 | 6649 | 3000 | 65 | 41 | 100 | 200 | 7 800 | 0 | 5600 | 2600 | 30 | 5 700 |
| W3.3 (3^{ième} passage) | 6586 | 3000 | 65 | 0 | 100 | 200 | 7 800 | 0 | 5600 | 2600 | 10 | 5657 |
| W3.3 (4^{ième} passage) | 6610 | 3000 | 0 | 0 | 0 | 200 | 7 800 | 0 | 7650 | 2600 | 3,0 | 5716 |
| W3.7 | 6609 | 3000 | 0 | 0 | 0 | 200 | 7 800 | 0 | 7650 | 2600 | 3,0 | 5716 |
| W4.1 | 1188 | 3000 | 0 | 0 | 0 | 200 | 7 800 | 0 | 7650 | 2600 | 3,0 | 294 |

Le bilan de masse de cimentation est représenté dans la tableau suivant.

| **Bilan de masse cimentation, en kg par tonne de concentrat brut** | | | | |
|---|---|---|---|---|
| | Total | Contenu sec | Eau | Ciment |
| W3.2a | 213 | 43 | 170 | |
| W3.2.b | 215 | 43 | 172 | |
| W3.6 | 3,31 | 0,66 | 2,64 | |
| W2.2 (*) | 343 | 343 | | |
| W5.1 | 1474 | 429 | 93 | 952 |

Le bilan d'activité durant le procédé est représenté dans le tableau suivant.

| **Bilan d'activité procédé, en Bq par tonne de concentrat brut** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W0 | 1,0E+10 | 3,0E+08 | 1,0E+09 | 5,0E+07 | 5,0E+07 | 5,0E+07 | 1,0E+06 | 1,0E+05 | 1,0E+04 | 1,0E+04 | 5,0E+06 | 1,5E+07 |
| W1.1 | 1,0E+10 | 3,0E+08 | 1,0E+09 | 5,0E+07 | 5,0E+07 | 5,0E+05 | 1,0E+06 | 1,0E+05 | 1,0E+04 | 1,0E+04 | 5,0E+06 | 1,5E+07 |
| W3.3 (3^{ième} passe) | 1,0E+04 | 3,0E+08 | 1,0E+09 | 5,0E+02 | 5,0E+02 | 5,0E+05 | 1,0E+01 | 1,0E+05 | 1,0E+03 | 1,0E-01 | 5,0E+01 | 1,5E+02 |
| W4.1 | 1,0E+04 | 3,0E+03 | 1,0E+04 | 5,0E+02 | 5,0E+02 | 5,0E+00 | 1,0E+01 | 1,0E+05 | 1,0E+03 | 1,0E-01 | 5,0E+01 | 1,5E+02 |

| **Bilan d'activité cimentation, en Bq par tonne de concentrat brut** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W3.2.a | 1,0E+10 | 0,0E+00 | 0,0E+00 | 5,0E+07 | 5,0E+07 | 0,0E+00 | 1,0E+06 | 0,0E+00 | 9,0E+03 | 1,0E+04 | 5,0E+06 | 1,5E+07 |
| W3.2.b+W3.6 | 0,0E+00 | 3,0E+08 | 1,0E+09 | 0,0E+00 | 0,0E+00 | 5,0E+05 | 0,0E+00 | 0,0E+00 | 0,0E+00 | 0,0E+00 | 0,0E+00 | 0,0E+00 |
| W2.2 | 0,0E+00 | 0,0E+00 | 0,0E+00 | 0,0E+00 | 0,0E+00 | 5,0E+07 | 0,0E+00 | 0,0E+00 | 0,0E+00 | 0,0E+00 | 0,0E+00 | 0,0E+00 |
| W5.1 | 1,0E+10 | 3,0E+08 | 1,0E+09 | 5,0E+07 | 5,0E+07 | 5,0E+07 | 1,0E+06 | 0,0E+00 | 9,0E+03 | 1,0E+04 | 5,0E+06 | 1,5E+07 |

| **Table 8.3.c : activité du concentrat décontaminé (W4.1), en Bq/kg** | | | | | | | | | | | | |
|---|---|---|---|---|---|---|---|---|---|---|---|---|
| | Cs | Co | ⁶³Ni | ⁵⁵Fe | ⁹⁰Sr | ¹⁴C | ⁹⁴Nb | ⁹⁹Tc | ¹²⁹I | U | Alpha Pu | ²⁴¹Pu |
| W4.1 | 8,42E+00 | 2,52E+00 | 8,42E+00 | 4,21E-01 | 4,21E-01 | 4,21E-03 | 8,42E-03 | 8,42E+01 | 8,42E-01 | 8,42E-05 | 4,21E-02 | 1,26E-01 |
| Euratom 13/59 (*) | 100 | 100 | 1,00E+05 | 1,00E+06 | 1000 | 1000 | 100 | 1000 | 10 | 1000 | 100 | 1,00E+04 |
| Contribution (**) | 8,42E-02 | 2,52E-02 | 8,42E-05 | 4,21E-07 | 4,21E-04 | 4,21E-06 | 8,42E-05 | 8,42E-02 | 8,42E-02 | 8,42E-08 | 4,21E-04 | 1,26E-05 |
| Total (***) | 0,279 | | | | | | | | | | | |

| | | | | | | | | | | | | |
|---|---|---|---|---|---|---|---|---|---|---|---|---|
| (*) : seuils de libération et d'exemption de la Directive 2013/59/Euratom, table A. (**) : pour chaque radioélément, la contribution est égale à l'activité divisée par le seuil. (***) : somme des contribution. Le concentrat décontaminé (W4.1) est considéré comme non radioactif si le total des contributions est inférieur à 1. | | | | | | | | | | | | |

Le tableau suivant représente le bilan en additifs ajoutés pendant le procédé et en eau.

| **Additifs et eau** | | | |
|---|---|---|---|
| Flux | Nature | moles/tonne | kg/tonne |
| A1.1 | HNO₃+H₂O | 5600 | 588 |
| DW1.1 | H₂O | | 5226 |
| A2.1 stoechiométrique | O₃ | 2430 | 117 |
| A2.1 réel | O₃ | 14 801 | 710 |
| A2.2 (pour capture CO₂) | CaO | 2970 | 167 |
| A3.1.a | Zéolithe | | 1,99 |
| A3.1.a | Charbon actif | | 19,9 |
| DW3.1.a | H₂O | | 128 |
| A3.1.b | Ba(OH)₂ | 165 | 28 |
| A3.1.b | NaOH | 2050 | 82 |
| DW3.1.b | H₂O | | 129 |
| A3.2 | TMT15 | | 0,66 |
| DW3.2 | H₂O | | 1,98 |
| A5.1 | Ciment | | 851 |
| DW5.1 | H₂O | | 262 |
| DW4.1 | H₂O | | 5 421 |

Le bilan d'eau (DW4.1+DW5.1-DW1.1-DW3.1.a-DW3.1.b-DW3.2) aboutit à une production nette de 198 kg/tonne.

Le concentrat est décontaminé, et peut être considéré comme non radioactif selon la Directive Européenne 2013/59, avec une marge de sécurité suffisante (critère = 0,279, pour une valeur requise inférieure à 1).

Le déchet secondaire (W5.1) consiste essentiellement en précipité de carbonate de calcium. S'ajoute à ce composant majoritaire des sulfates de baryum et un peu de charbon actif. Les précipités se cimentent aisément. Le charbon actif s'incorpore dans la matrice cimentaire, à condition de convenablement malaxer le mélange.

Le déchet secondaire (W5.1) cimenté, acceptable en l'état par un centre de stockage de surface, représente 1318 kg par tonne de concentrat brut, soit un facteur de réduction de volume de 1,16 par rapport au concentrat brut, alors qu'une cimentation directe de ce concentrat brut aboutirait à un facteur d'augmentation de volume de 4 ou 5.

L'activité du déchet secondaire (W5.1) cimenté est de 8,7 kBq/g, essentiellement en ¹³⁷Cs, ce qui est compatible avec un stockage de surface.

Le procédé aboutit au rejet à l'atmosphère d'une petite fraction de l'ordre de 1% de l'inventaire ¹⁴C, soit, par tonne de concentrat brut, un rejet de 0,5 MBq de ¹⁴C. Ce rejet inévitable est normalement compatible avec les autorisations d'un site de production nucléaire, et ne présente pas d'impact significatif sur l'environnement.

Le pH est mesuré directement par un pHmètre classique.

Les mesures de teneur des radioéléments sont réalisées selon les distinctions suivantes.

Les radioéléments faciles à mesurer tels que des émetteurs gamma puissants, présents en grande quantité, essentiellement ¹³⁷Cs, ¹³⁴Cs, ⁶⁰Co sont suivis en temps réel par spectrométrie gamma sur les éléments du procédé (cuves, tuyauteries).

Les autres radioéléments sont mesurés par échantillonnage et analyses radiochimiques dans le déchet brut pour l'inventaire radiologique du déchet brut, et sur le procédé pour vérification périodique. Pour leur évaluation au fil de l'eau, on utilise un spectre type, issus des analyses radiochimiques. Ce spectre type décrit les proportions des différents radioéléments. À travers ce spectre type et la mesure des radioéléments faciles à mesurer, on peut estimer en temps réel l'activité des autres radioéléments.

Un point plus délicat est le suivi en temps réel de la chimie du déchet et du procédé. Il faut en particulier connaître les teneurs en carbonates et sulfates afin des les précipiter et/ou de les « stripper ». Nous procédons par dosage sur échantillons pris dans la cuve de préparation (T1.1).

De même la teneur de solution en matière sèche est un paramètre important pour le procédé. Elle peut être mesurée en temps réel par conductimétrie et densimétrie dans la cuve de préparation (T1.1). Ces types de mesures sont raccordés aux mesures plus fines obtenues par dosage sur échantillons

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de décontamination de déchets radioactifs alcalins boratés comprenant au moins un composé organique et un radioélément pour obtenir un concentrat de déchets décontaminés et des déchets secondaires (W5.1), le procédé comprenant au moins les étapes suivantes :
- une étape de préparation des déchets (WO) ;
- une étape (1) de minéralisation des composés organiques contenus dans les déchets ;
- une étape d'extraction des radioéléments contenus dans les déchets pour obtenir le concentrat (W3.7) de déchets décontaminés ;
l'étape d'extraction comprenant au moins une étape de contact des déchets avec du charbon actif,
l'étape d'extraction comprend en outre un cycle d'extraction du strontium 90 et d'autres radioéléments contenus dans les déchets suivant un cycle d'extraction du césium et des composés organiques résiduels, le cycle d'extraction du strontium 90 et d'autres radioéléments comprenant :
- une étape d'ajout d'oxyde ou d'hydroxyde de baryum et/ou de calcium et, éventuellement, d'un sel de sulfate dans les déchets contenus dans une cuve amont (T3.1) pour obtenir une partie solide, dite deuxième partie solide, précipitée de sulfate et de carbonate de baryum et/ou de calcium entraînant un co-précipité du strontium 90,
- une étape d'ajustement du pH à 10 par ajout de base,
- une étape de séparation de la deuxième partie solide et d'une partie liquide,
la deuxième partie solide étant ajoutée à des déchets secondaires (W5.1) et la partie liquide étant transférée dans une cuve aval (T3.2).

2. Procédé selon la revendication 1, **caractérisé en ce que** l'étape (1) de minéralisation comprend au moins une étape de traitement par bullage par de l'ozone des déchets radioactifs pour des valeurs de pH comprises entre 8 et 10 dans une cuve de préparation (T1.1).

3. Procédé selon au moins une des revendications 1 et 2, **caractérisé en ce que** l'étape (1) de minéralisation comprend en outre une étape de stripage de CO₂ créé à partir du bullage de l'ozone dans les déchets.

4. Procédé selon la revendication 1, **caractérisé en ce que** l'étape d'extraction comprend au moins une étape de précipitation comprenant au moins le cycle d'extraction du césium et de composants organiques résiduels qui n'ont pas été minéralisés lors de l'étape de minéralisation, le cycle d'extraction comprenant :
- l'étape de contact qui est une étape d'ajout du charbon actif et de zéolithe dans les déchets contenus dans la cuve amont (T3.1),
- une étape de mélange ou d'agitation dans la cuve amont (T3.1) du charbon actif, de la zéolithe et des déchets pour obtenir une autre partie solide, dite première partie solide, précipitée et une partie liquide,
- une étape de séparation de la première partie solide et de la partie liquide,
la première partie solide étant ajoutée aux déchets secondaires (W5.1) et la partie liquide étant transférée dans la cuve aval (T3.2),
la partie liquide étant éventuellement réintroduite dans la cuve amont (T3.1) pour un autre cycle d'extraction en tant que déchets.

5. Procédé selon la revendication 1, **caractérisé en ce que** l'étape d'extraction comprend au moins une étape de précipitation comprenant au moins un cycle d'extraction du césium et de composants organiques résiduels qui n'ont pas été minéralisés par l'étape de minéralisation, le cycle d'extraction comprenant :
- l'étape de contact qui est une étape d'ajout du charbon actif et une étape d'ajout ou de synthèse de sel de ferricyanure dans les déchets contenus dans la cuve amont (T3.1),
- une étape de mélange ou d'agitation dans la cuve amont (T3.1) du charbon actif, du sel de ferricyanure et des déchets pour obtenir une première partie solide précipitée et une partie liquide,
- une étape de séparation de la première partie solide et de la partie liquide,
la première partie solide étant ajoutée aux déchets secondaires(W5.1) et la partie liquide étant transférée dans la cuve aval (T3.2),
la partie liquide étant éventuellement réintroduite dans la cuve amont (T3.1) pour un autre cycle d'extraction en tant que déchets.

6. Procédé selon la revendication 5, **caractérisé en ce que** l'étape de synthèse de sel de ferricyanure est une synthèse de bleu de Prusse comprenant :
- une étape d'ajout de K₃Fe(CN)₆,
- une étape d'ajout de sel de cobalt à la stoechiométrie pour former du KCoFe(CN)₆,
la première partie solide étant le KCoFe(CN)₆ entrainant le césium.

7. Procédé selon la revendication 1, **caractérisé en ce que** l'étape d'extraction comprend au moins une étape d'absorption en colonnes, l'étape d'absorption en colonnes comprenant :
- l'étape de contact qui est une étape de passage des déchets par au moins une première colonne et une deuxième colonne successives contenant du charbon actif pour absorber les composés organiques résiduels qui n'ont pas été minéralisés lors de l'étape de minéralisation puis de passage des déchets par au moins une troisième colonne et une quatrième colonne successives contenant de la zéolithe pour absorber le césium,
- une étape de détection de la saturation du charbon actif de la première colonne par un premier système de détection qui détecte la présence de déchets organiques lors du passage des déchets de la première colonne à la deuxième colonne,
le charbon actif de la première colonne étant ajouté aux déchets secondaires (W5.1) lorsque des composés organiques sont détectés par le premier système de détection, la deuxième colonne prenant la place de la première colonne, la première colonne prenant la place de la deuxième colonne et étant remplie de charbon actif non saturé,
- une étape de détection de la saturation de la zéolithe de la troisième colonne par un deuxième système de détection qui détecte la présence de césium lors du passage des déchets de la troisième colonne à la quatrième colonne,
la zéolithe de la troisième colonne étant ajoutée aux déchets secondaires (W5.1) lorsque du césium est détecté par le deuxième système de détection, la quatrième colonne prenant la place de la troisième colonne, la troisième colonne prenant la place de la quatrième colonne et étant remplie de zéolithe non saturée.

8. Procédé selon l'une des revendications 1 à 7, **caractérisé en ce que** l'étape d'extraction comprend en outre au moins un cycle d'extraction de l'iode 129 contenu dans les déchets, le cycle d'extraction de l'iode 129 comprenant :
- une étape d'ajout d'iode non radioactif sous forme soluble en mélange d'iodure et d'iodate dans les déchets contenus dans la cuve amont (T3.1),
- une étape d'ajout de plomb ou d'argent non radioactif sous forme soluble en quantité stoechiométrique dans les déchets pour obtenir une troisième partie solide comprenant de l'iodure de plomb ou d'argent et de l'iodate d'argent et une partie liquide,
- une étape de séparation de la troisième partie solide et de la partie liquide,
la troisième partie solide étant ajoutée aux déchets secondaires (W5.1) et la partie liquide étant transférée dans la cuve aval (T3.2),
la partie liquide étant éventuellement réintroduite dans la cuve amont (T3.1) pour un autre cycle d'extraction de l'iode 129 en tant que déchets.

9. Procédé selon au moins l'une des revendications 1 à 8, **caractérisé en ce que** l'étape d'extraction comprend en outre un cycle d'extraction des métaux de transition résiduels contenus dans les déchets après le cycle d'extraction du strontium 90 et d'autres radioéléments, le cycle d'extraction des métaux de transition comprenant :
- une étape d'ajout d'un composé de soufre, par exemple du TMT15® dans les déchets pour obtenir une quatrième partie solide précipitée des métaux de transition résiduels,
- une étape de filtration de la quatrième partie solide et d'une partie liquide,
la quatrième partie solide étant ajoutée aux déchets secondaires (W5.1), la partie liquide étant le concentrat de déchets décontaminés.

10. Procédé selon la revendication 9, **caractérisé en ce que** l'étape d'extraction de métaux de transition est précédée d'un cycle d'extraction du césium comprenant les étapes suivantes :
- une étape d'ajout de tétraphénylborate de sodium dans les déchets pour obtenir une partie solide comprenant du césium et une partie liquide,
- une étape de séparation de la partie solide et d'une partie liquide,
la partie solide étant ajoutée aux déchets secondaires (W5.1), la partie liquide étant réintroduite dans le cycle d'extraction du césium en tant que déchet ou étant introduit dans le cycle d'extraction de métaux de transition.

11. Procédé selon au moins une des revendications 1 à 10, **caractérisé en ce que** l'étape de minéralisation comprend une étape de maintien de la valeur de pH dans une plage de 8 à 10 par ajout de base.

12. Procédé selon au moins une des revendications 1 à 10, **caractérisé en ce que** l'étape de préparation comprend au moins les étapes suivantes :
- une étape d'ajustement du pH des déchets à une valeur de 4 par ajout d'acide dans la cuve de préparation (T1.1),
- une étape de stripage du CO₂ à l'air ou à l'azote afin de dégazer et rejeter dans l'atmosphère le carbone minéral contenu dans les déchets,
- une étape pour remonter la valeur de pH des déchets dans une plage allant de 8 à 10.

13. Procédé selon la revendication 1 à 12, **caractérisé en ce que** l'étape de préparation comprend au moins une étape d'ajustement de la concentration des déchets.

14. Procédé selon au moins une des revendications 1 à 13, **caractérisé en ce que** l'étape de préparation comprend en outre les étapes suivantes :
- une étape d'ajustement du pH des déchets à une valeur de 4 par ajout d'acide dans la cuve de préparation (T1.1),
- une étape de stripage du CO₂ à l'air ou à l'azote afin de dégazer le carbone minéral contenu dans les déchets, le carbone 14 contenu dans les déchets étant capturé sous forme de carbonate de calcium ou de baryum par un dispositif de lavage à la soude ou un filtre à chaux vive connecté à un ou des évents de la cuve de préparation, le carbonate de calcium ou de baryum étant ajouté aux déchets secondaires (W5.1),
- une étape pour remonter la valeur de pH des déchets dans une plage allant de 8 à 10.

15. Procédé selon au moins une des revendications 1 à 13, **caractérisé en ce que** l'étape de préparation comprend en outre les étapes suivantes :
- une étape d'ajout de chlorure de baryum pour obtenir un précipité de carbonate de baryum,
- une étape d'ajout du carbonate de baryum aux déchets secondaires (W5.1).

16. Procédé selon au moins l'une des revendications 1 à 15, **caractérisé en ce que** le procédé comprend une étape d'évaporation dans laquelle la partie liquide obtenue suite à l'étape d'extraction est évaporée pour obtenir un solide composé de sels et de boue séchée.

17. Procédé selon au moins l'une des revendications 1 à 15, **caractérisé en ce que** le procédé comprend une étape de cimentation des déchets secondaires (W5.1) comprenant une étape de concentration des déchets secondaires (W5.1) par évaporation et/ou mécaniquement jusqu'à ce que la teneur en eau contenue dans les déchets secondaires (W5.1) atteigne une valeur correspondant à la formulation d'un ciment.

18. Procédé selon au moins l'une des revendications 1 à 15, **caractérisé en ce que** le procédé comprend une étape de traitement thermique des déchets secondaires (W5.1).

## Patentansprüche

1. Verfahren zur Dekontaminierung von alkalischem, boriertem, radioaktivem Abfall, der mindestens eine organische Verbindung und ein Radionuklid enthält, um ein dekontaminiertes Abfallkonzentrat und Sekundärabfall (W5.1) zu erhalten, wobei das Verfahren zumindest die folgenden Schritte umfasst:
- einen Abfallvorbereitungsschritt (WO);
- einen Mineralisierungsschritt (1) der organischen Verbindungen in dem Abfall;
- einen Extraktionsschritt der dem Abfall enthaltenen Radionuklide, um das dekontaminierte Abfallkonzentrat (W3.7) zu erhalten;
wobei der Extraktionsschritt mindestens einen Kontaktschritt des Abfalls mit Aktivkohle umfasst,
und der Extraktionsschritt ferner einen Extraktionszyklus für Strontium-90 und für andere in dem Abfall enthaltenen Radionuklide nach einem Extraktionszyklus für Cäsium und für die restlichen organischen Verbindungen umfasst, wobei der Extraktionszyklus für Strontium-90 und für andere radioaktive Elemente folgende Schritte einschließt:
- einen Zugabeschritt von Bariumoxid oder Bariumhydroxid und/oder Calcium, und gegebenenfalls einem Sulfatsalz zu dem Abfall in einem stromaufwärtigen Rezipienten (T3.1), um einen festen Bestandteil zu erhalten, der zweiter fester Bestandteil genannt wird, durch Bariumsulfat und Bariumcarbonat und/oder Calcium ausgefällt ist und ein Co-Präzipitatat mit Strontium-90 verursacht,
- einen Einstellungsschritt des pH auf 10 durch Basenzugabe,
- einen Trennungsschritt des zweiten festen Bestandteils von einem flüssigen Bestandteil,
wobei der zweite feste Bestandteil einem Sekundärabfall (W5.1) hinzugefügt wird und der flüssige Teil in einen stromabwärtigen Rezipienten (T3.2) überführt wird.

2. Verfahren nach Anspruch 1, **dadurch gekennzeichnet, dass** der Mineralisierungsschritt (1) mindestens einen Behandlungsschritt durch Sprudeln des radioaktiven Abfalls mit Ozon für pH-Werte zwischen 8 und 10 in einem Vorbereitungsrezipienten (T1.1) umfasst.

3. Verfahren nach mindestens einem der Ansprüche 1 und 2, **dadurch gekennzeichnet, dass** der Mineralisierungsschritt (1) weiterhin einen CO₂-Abscheidungsschrit umfasst, der durch das Sprudeln von Ozon in den Abfall verursacht ist.

4. Verfahren nach Anspruch 1, **dadurch gekennzeichnet, dass** der Extraktionsschritt mindestens einen Fällungsschritt umfasst, der mindestens den Extraktionszyklus für Cäsium und die verbliebenen organischen Komponenten, die nicht während des Mineralisierungsschritts mineralisierten wurden, umfasst, wobei der Extraktionszyklus folgende Schritte umfasst:
- den Kontaktschritt, der ein Zugabeschritt von Aktivkohle und eines Zeoliths zu dem in dem stromaufwärtigen Rezipienten (T3.1) enthaltenen Abfall ist,
- einen Misch- oder Rührschritt der Aktivkohle, des Zeoliths und des Abfalls im stromaufwärtigen Rezipienten (T3.1), um einen weiteren ausgefällten, festen Bestandteil, der erster fester Bestandteil genannt wird, und einen flüssigen Bestandteil zu erhalten,
- einen Trennungsschritt des ersten festen Bestandteils von dem flüssigen Bestandteil,
wobei der erste feste Bestandteil dem Sekundärabfall (W5.1) hinzugefügt wird und der flüssige Bestandteil in den stromabwärtigen Rezipienten (T3.2) überführt wird,
wobei der flüssige Bestandteil gegebenenfalls für einen weiteren Extraktionszyklus dem stromaufwärtigen Rezipienten (T3.1) als Abfall wieder zugeführt wird.

5. Verfahren nach Anspruch 1, **dadurch gekennzeichnet, dass** der Extraktionsschritt mindestens einen Fällungsschritt umfasst, der mindestens einen Extraktionszyklus für Cäsium und die verbliebenen organischen Komponenten, die nicht während des Mineralisierungsschritts mineralisierten wurden, umfasst, wobei der Extraktionszyklus folgende Schritte umfasst:
- den Kontaktschritt, der ein Zugabeschritt von Aktivkohle und ein Zugabe- oder Syntheseschritt eines Ferricyanid-Salzes zu oder in dem in dem stromaufwärtigen Rezipienten (T3.1) enthaltenen Abfall ist,
- einen Misch- oder Rührschritt der Aktivkohle, des Ferricyanid-Salzes und des Abfalls im stromaufwärtigen Rezipienten (T3.1), um einen ausgefällten, ersten festen Bestandteil und einen flüssigen Bestandteil zu erhalten,
- einen Trennungsschritt des ersten festen Bestandteils von dem flüssigen Bestandteil,
wobei der erste feste Bestandteil dem Sekundärabfall (W5.1) hinzugefügt wird und der flüssige Bestandteil in den stromabwärtigen Rezipienten (T3.2) überführt wird,
wobei der flüssige Bestandteil gegebenenfalls für einen weiteren Extraktionszyklus dem stromaufwärtigen Rezipienten (T3.1) als Abfall wieder zugeführt wird.

6. Verfahren nach Anspruch 5, **dadurch gekennzeichnet, dass** der Syntheseschritt des Ferricyanid-Salzes eine Preußisch-Blau-Synthese ist, die folgende Schritte umfasst:
- einen Zugabeschritt von K₃Fe(CN)₆,
- einen Zugabeschritt von Kobaltsalz im stöchiometrischen Verhältnis, um KCo-Fe(CN)₆ zu bilden,
wobei der erste feste Bestandteil KCoFe(CN)₆ ist und Cäsium mitnimmt.

7. Verfahren nach Anspruch 1, **dadurch gekennzeichnet, dass** der Extraktionsschritt mindestens einen Säulen-Absorptionsschritt umfasst, wobei der Säulen-Absorptionsschritt folgende Schritte umfasst:
- einen Kontaktschritt, der ein Durchflussschritt des Abfalls nacheinander durch zumindest eine erste und eine zweite Säule, die Aktivkohle enthalten, um die verbliebenen organischen Verbindungen zu absorbieren, die nicht während des Mineralisierungsschrittes mineralisiert wurden, und dann nacheinander durch zumindest eine dritte und eine vierte Säule, die Zeolith enthalten, um Cäsium zu absorbieren, ist,
- einen Sättigungsdetektionsschritt der Aktivkohle in der ersten Säule durch ein erstes Detektionssystem, das das Vorhandensein von organischem Abfall während des Übergangs des Abfalls aus der ersten Säule in die zweite Säule feststellt, wobei die Aktivkohle aus der ersten Säule dem Sekundärabfall (W5.1) hinzugefügt wird, wenn organische Verbindungen durch das erste Detektionssystem detektiert werden, wobei die zweite Säule den Platz der ersten Säule einnimmt, und die erste Säule den Platz der zweiten Säule einnimmt und mit ungesättigter Aktivkohle gefüllt wird,
- einen Sättigungsdetektionsschritt des Zeoliths der dritten Säule durch ein zweites Detektionssystem, das die Anwesenheit von Cäsium während des Übergangs von Abfall aus der dritten Säule in die vierte Säule detektiert,
wobei der Zeolith der dritten Säule dem Sekundärabfall (W5.1) zugegeben wird, wenn Cäsium durch das zweite Detektionssystem erfasst wird, wobei die vierte Säule den Platz der dritten Säule einnimmt, und die dritte Säule den Platz der vierten Säule einnimmt und ungesättigtem Zeolith gefüllt wird.

8. Verfahren nach einem der Ansprüche 1 bis 7, **dadurch gekennzeichnet, dass** der Extraktionsschritt ferner mindestens einen Extraktionszyklus von in dem Abfall enthaltenem Jod-129 umfasst, wobei der Extraktionszyklus von Jod-129 folgende Schritte umfasst:
- einen Zugabeschritt von nicht radioaktivem Jod in löslicher Form als Gemisch von Jodid und Jodat zu in dem stromaufwärtigen Rezipienten (T3.1) enthaltenen Abfall,
- einen Zugabeschritt von nicht radioaktivem Blei oder Silber in löslicher Form zu dem Abfall in einem stöchiometrischen Verhältnis, um einen dritten festen Bestandteil, der Blei- oder Silberjodid und Silberjodat enthält, und einen flüssigen Bestandteil zu erhalten,
- einen Trennungsschritt des dritten festen Bestandteils von dem flüssigen Bestandteil,
wobei der dritte feste Bestandteil dem Sekundärabfall zugegeben wird (W5.1) und der flüssige Bestandteil in den stromabwärtigen Rezipienten (T3.2) überführt wird,
wobei der flüssige Bestandteil gegebenenfalls dem stromaufwärtigen Rezipienten (T3.1) als Abfall für einen weiteren Extraktionszyklus von Jod-129 wieder zugeführt wird.

9. Verfahren nach mindestens einem der Ansprüche 1 bis 8, **dadurch gekennzeichnet, dass** der Extraktionsschritt außerdem einen Extraktionszyklus für verbliebene Übergangsmetalle, die in dem Abfall nach dem Extraktionszyklus für Strontium-90 und andere radioaktive Elemente enthalten sind, umfasst, wobei der Extraktionszyklus für Übergangsmetalle folgende Schritte umfasst:
- einen Zugabeschritt einer Schwefelverbindung, zum Beispiel TMT15®, zu dem Abfall, um einen mit verbliebenen Übergangsmetallen ausgefällten, vierten festen Bestandteil zu erhalten,
- einen Filtrierungsschritt des vierten festen Bestandteils aus einem flüssigen Bestandteil,
wobei der vierte feste Anteil dem Sekundärabfall (W5.1) hinzugefügt wird, und der flüssige Bestandteil das dekontaminierte Abfallkonzentrat ist.

10. Verfahren nach Anspruch 9, **dadurch gekennzeichnet, dass** dem Extraktionszyklus für Übergangsmetalle ein Cäsium-Extraktionszyklus vorausgeht, der die folgenden Schritte umfasst:
- einen Zugabeschritt von Natriumtetraphenylborat zu dem Abfall, um einen Cäsium enthaltenden, festen Bestandteil und einen flüssigen Bestandteil zu erhalten,
- einen Trennungsschritt des festen Bestandteils von dem flüssigen Bestandteil, wobei der feste Bestandteil dem Sekundärabfall (W5.1) hinzugefügt wird, und der flüssige Teil dem Cäsium-Extraktionszyklus erneut als Abfall zugeführt wird oder dem Extraktionszyklus für Übergangsmetalle zugeführt wird.

11. Verfahren nach zumindest einem der Ansprüche 1 bis 10, **dadurch gekennzeichnet, dass** der Mineralisierungsschritt einen Halteschritt des pH-Wertes in einem Bereich von 8 bis 10 durch Zugabe von Base umfasst.

12. Verfahren nach zumindest einem der Ansprüche 1 bis 10, **dadurch gekennzeichnet, dass** der Vorbereitungsschritt zumindest die folgenden Schritte umfasst:
- einen pH-Einstellungsschritt des Abfalls in dem Vorbereitungsrezipienten (T1.1) auf einen Wert von 4 durch Säurezugabe,
- einen CO₂-Abscheidungsschritt mit Luft oder Stickstoff zum Entgasen und zur Abgabe von in dem Abfall enthaltenem, anorganischen Kohlenstoff in die Atmosphäre,
- einen Schritt, um den pH-Wert des Abfalls in einen Bereich von 8 bis 10 zu erhöhen.

13. Verfahren nach Anspruch 1 bis 12, **dadurch gekennzeichnet, dass** der Vorbereitungsschritt wenigstens einen Einstellschritt für die Konzentration des Abfalls umfasst.

14. Verfahren nach zumindest einem der Ansprüche 1 bis 13, **dadurch gekennzeichnet, dass** der Vorbereitungsschritt weiterhin die folgenden Schritte umfasst:
- einen pH-Einstellungsschritt des Abfalls in dem Vorbereitungsrezipienten (T1.1) auf einen Wert von 4 durch Säurezugabe,
- einen CO₂-Abscheidungsschritt mit Luft oder Stickstoff zum Entgasen von in dem Abfall enthaltenem, anorganischen Kohlenstoff, wobei der in dem Abfall enthaltene Kohlenstoff-14 von einer Natriumhydroxid-Waschvorrichtung oder einem Branntkalk-Filter, die mit einer oder mehreren Entlüftungsöffnungen des Vorbereitungsrezipienten verbunden sind, eingefangen wird, wobei das Calcium- oder Bariumcarbonat dem sekundären Abfall (W5.1) hinzugefügt wird,
- einen Schritt, um den pH-Wert des Abfalls in einen Bereich von 8 bis 10 zu erhöhen.

15. Verfahren nach zumindest einem der Ansprüche 1 bis 13, **dadurch gekennzeichnet, dass** der Vorbereitungsschritt weiterhin die folgenden Schritte umfasst:
- einen Zugabeschritt von Bariumchlorid, um eine Ausfällung von Bariumcarbonat zu erhalten,
- einen Zugabeschritt des Bariumcarbonats zu dem Sekundärabfall (W5.1).

16. Verfahren nach zumindest einem der Ansprüche 1 bis 15, **dadurch gekennzeichnet, dass** das Verfahren einen Verdampfungsschritt umfasst, in dem der aus dem Extraktionsschritt erhaltene, flüssige Bestandteil verdampft wird, um einen Feststoff aus Salzen und getrocknetem Schlamm zu erhalten.

17. Verfahren nach zumindest einem der Ansprüche 1 bis 15, **dadurch gekennzeichnet, dass** das Verfahren dadurch einen Zementierungsschritt des Sekundärabfalls (W5.1) umfasst, der einen Konzentrierungsschritt des Sekundärabfalls (W5.1) durch Verdampfung und/oder mechanisch umfasst, bis der Wassergehalt im Sekundärabfall (W5.1) einen Wert erreicht, der der Zusammensetzung eines Zements entspricht.

18. Verfahren nach zumindest einem der Ansprüche 1 bis 15, **dadurch gekennzeichnet, dass** das Verfahren einen Wärmebehandlungsschritt des sekundären Abfalls (W5.1) umfasst.

## Claims

1. Process for decontamination of borated alkaline radioactive waste comprising at least one organic compound and a radioelement to obtain a concentrate of decontaminated waste and secondary waste (W5.1), the process comprising at least the following steps:
- a waste preparation step (WO);
- a step (1) of mineralisation of the organic compounds contained in the waste;
- a step of extraction of the radioelements contained in the waste to obtain the concentrate (W3.7) of decontaminated waste;
the extraction step comprising at least a step of contact of the waste with activated carbon,
the extraction step also comprises an extraction cycle of strontium 90 and of other radioelements contained in the waste following a cycle of extraction of caesium and of the residual organic compounds, the cycle of extraction of strontium 90 and of other radioelements comprising:
- a step of addition of barium and/or of calcium oxide or hydroxide and, optionally, of a sulphate salt to the waste contained in an upstream tank (T3.1) to obtain a precipitated solid part, called second solid part, of barium and/or of calcium sulphate and carbonate resulting in a co-precipitate of strontium 90,
- a step of adjustment of the pH to 10 by addition of base,
- a step of separation of the second solid part and of a liquid part,
the second solid part being added to secondary waste (W5.1) and the liquid part being transferred to a downstream tank (T3.2).

2. Process according to claim 1, **characterised in that** the mineralisation step (1) comprises at least one step of treatment of the radioactive waste by bubbling with ozone for pH values of between 8 and 10 in a preparation tank (T1.1).

3. Process according to at least one of claims 1 and 2, **characterised in that** the mineralisation step (1) also comprises a step of stripping of CO₂ created by the bubbling of ozone in the waste.

4. Process according to claim 1, **characterised in that** the extraction step comprises at least one precipitation step comprising at least the extraction cycle of caesium and of residual organic components which have not been mineralised in the mineralisation step, the extraction cycle comprising:
- the contact step which is a step of addition of activated carbon and of zeolite to the waste contained in the upstream tank (T3.1),
- a step of mixture or of agitation in the upstream tank (T3.1) of the activated carbon, of the zeolite and of the waste to obtain another precipitated solid part, called first solid part, and a liquid part,
- a step of separation of the first solid part and of the liquid part,
the first solid part being added to the secondary waste (W5.1) and the liquid part being transferred to the downstream tank (T3.2),
the liquid part optionally being reintroduced as waste into the upstream tank (T3.1) for another extraction cycle.

5. Process according to claim 1, **characterised in that** the extraction step comprises at least a precipitation step comprising at least one cycle of extraction of caesium and of residual organic components which have not been mineralised by the mineralisation step, the extraction step comprising:
- the contact step which is a step of addition of activated carbon and a step of addition or synthesis of ferricyanide salt in the waste contained in the upstream tank (T3.1),
- a step of mixture or agitation in the upstream tank (T3.1) of the activated carbon, of the ferricyanide salt and of the waste to obtain a first precipitated solid part and a liquid part,
- a step of separation of the first solid part and of the liquid part,
the first solid part being added to the secondary waste(W5.1) and the liquid part being transferred to the downstream tank (T3.2),
the liquid part being optionally reintroduced into the upstream tank (T3.1) as waste for another extraction cycle.

6. Process according to claim 5, **characterised in that** the step of ferricyanide salt synthesis is synthesis of Prussian blue comprising:
- a step of addition of K₃Fe(CN)₆,
- a step of addition of cobalt salt at the stoichiometry to form KCoFe(CN)₆,
the first solid part being KCoFe(CN)₆ resulting in the caesium.

7. Process according to claim 1, **characterised in that** the extraction step comprises at least one column absorption step, the column absorption step comprising:
- the contact step which is a step of passage of the waste through at least a first column and a second successive column containing activated carbon to absorb the residual organic compounds which have not been mineralised in the mineralisation step and then of passage of the waste through at least a third column and a fourth successive column containing zeolite to absorb the caesium,
- a step of detection of the saturation of the activated carbon of the first column by a first detection system which detects the presence of organic waste during passage of the waste from the first column to the second column,
the activated carbon of the first column being added to the secondary waste (W5.1) when organic compounds are detected by the first detection system, the second column taking the place of the first column, the first column taking the place of the second column and being filled with unsaturated activated carbon,
- a step of detection of the saturation of the zeolite of the third column by a second detection system which detects the presence of caesium during passage of the waste from the third column to the fourth column,
the zeolite of the third column being added to the secondary waste (W5.1) when caesium is detected by the second detection system, the fourth column taking the place of the third column, the third column taking the place of the fourth column and being filled with unsaturated zeolite.

8. Process according to one of claims 1 to 7, **characterised in that** the extraction step also comprises at least one cycle of extraction of iodine 129 contained in the waste, the cycle for extraction of iodine 129 comprising:
- a step of addition of non-radioactive iodine in soluble form in iodide and iodate mixture to the waste contained in the upstream tank (T3.1),
- a step of addition of non-radioactive lead or silver in soluble form in stoichiometric quantity to the waste to obtain a third solid part comprising lead or silver iodide and silver iodate and a liquid part,
- a step of separation of the third solid part and of the liquid part,
the third solid part being added to the secondary waste (W5.1) and the liquid part being transferred to the downstream tank (T3.2),
the liquid part being optionally reintroduced as waste into the upstream tank (T3.1) for another cycle of extraction of iodine 129.

9. Process according to at least one of claims 1 to 8, **characterised in that** the extraction step also comprises a cycle of extraction of the residual transition metals contained in the waste after the cycle of extraction of strontium 90 and other radioelements, the cycle of extraction of the transition metals comprising:
- a step of addition of a sulphur compound, for example TMT15^{®} to the waste to obtain a precipitated fourth solid part of the residual transition metals,
- a step of filtration of the fourth solid part and of a liquid part,
the fourth solid part being added to the secondary waste (W5.1), the liquid part being the concentrate of the decontaminated waste.

10. Process according to claim 9, **characterised in that** the step of extraction of transition metals is preceded by a cycle for extraction of caesium comprising the following steps:
- a step of addition of sodium tetraphenylborate to the waste to obtain a solid part comprising caesium and a liquid part,
- a step of separation of the solid part and of a liquid part,
the solid part being added to the secondary waste (W5.1), the liquid part being reintroduced as waste into the caesium extraction cycle or being introduced into the extraction cycle of transition metals.

11. Process according to at least one of claims 1 to 10, **characterised in that** the mineralisation step comprises a step of maintenance of the pH value within a range from 8 to 10 by addition of base.

12. Process according to at least one of claims 1 to 10, **characterised in that** the preparation step comprises at least the following steps:
- a step of adjustment of the pH of the waste to a value of 4 by addition of acid to the preparation tank (T1.1),
- a step of stripping of CO₂ with air or nitrogen in order to degas and reject into the atmosphere the mineral carbon contained in the waste,
- a step to raise the pH value of the waste back into a range of from 8 to 10.

13. Process according to claim 1 to 12, **characterised in that** the preparation step comprises at least one step of adjustment of the concentration of the waste.

14. Process according to at least one of claims 1 to 13, **characterised in that** the preparation step also comprises the following steps:
- a step of adjustment of the pH of the waste to a value of 4 by addition of acid to the preparation tank (T1.1),
- a step of stripping of CO₂ with air or nitrogen in order to degas the mineral carbon contained in the waste, the carbon-14 contained in the waste being captured in the form of calcium or barium carbonate by a soda washing device or a quick lime filter connected to an outlet or to outlets of the preparation tank, the calcium or barium carbonate being added to the secondary waste (W5.1),
- a step for raising the pH value of the waste back to within a range of from 8 to 10.

15. Process according to at least one of claims 1 to 13, **characterised in that** the preparation step also comprises the following steps:
- a step of addition of barium chloride to obtain a precipitate of barium carbonate,
- a step of addition of barium carbonate to the secondary waste (W5.1).

16. Process according to at least one of claims 1 to 15, **characterised in that** the process comprises an evaporation step in which the liquid part obtained following the extraction step is evaporated to obtain a solid composed of salts and dry mud.

17. Process according to at least one of claims 1 to 15, **characterised in that** the process comprises a step of cementation of the secondary waste (W5.1) comprising a step of concentration of the secondary waste (W5.1) by evaporation and/or mechanically until the water content contained in the secondary waste (W5.1) reaches a value corresponding to the formulation of a cement.

18. Process according to at least one of claims 1 to 15, **characterised in that** the process comprises a step of thermal treatment of the secondary waste (W5.1).
